# EUROPEAN PATENT SPECIFICATION

(11) **EP 3 863 033 B1**
(45) Date of publication and mention of the grant of the patent: **10.06.2026**
(21) Application number: 21155798.8
(22) Date of filing: 08.02.2021
(51) Int. Cl.: H01G 7/02, H01G 5/18, H01G 5/38, H01H 59/00, H02N 1/08

(54) **VIBRATION-DRIVEN ENERGY HARVESTER**
DURCH VIBRATION ANGETRIEBENER ENERGIEGEWINNER
RÉCUPÉRATEUR D'ÉNERGIE À VIBRATIONS

(30) Priority: 10.02.2020 JP 2020020830
(43) Date of publication of application: 11.08.2021
(73) Proprietor: Saginomiya Seisakusho, Inc., Tokyo 165-0033 (JP)
(72) Inventor: MORITA, Masahiro, Sayama-shi, Saitama 3501395 (JP); MITSUYA, Hiroyuki, Sayama-shi, Saitama 3501395 (JP); ASHIZAWA, Hisayuki, Sayama-shi, Saitama 3501395 (JP)
(74) Representative: V.O.

(56) References cited:
- EP-A1- 3 352 365
- EP-A1- 3 550 714
- EP-B1- 3 352 365
- JP-A- 2011 087 384
- US-A1- 2016 204 716

## Description

### TECHNICAL FIELD

The present invention relates to a vibration-driven energy harvester.

### BACKGROUND ART

There are vibration-driven energy harvesters known in the related art that generate power by using an environmental vibration. A vibration-driven energy harvester assumes a structure that includes a pair of movable comb electrodes, located at a movable unit supported by an elastic support member, which are disposed so as to interdigitatably engage with /disengage from fixed comb electrodes disposed at a fixed unit to face opposite the individual movable electrodes. As an impact originating from an external source is applied to the vibration-driven energy harvester, the elastically supported movable comb electrodes vibrate relative to the fixed comb electrodes, the movable comb electrodes are interdigitatably engaged with and disengaged from the fixed comb electrodes, and power is generated as a result.

The vibration-driven energy harvester comprises a first movable comb electrode that is interdigitatably engaged with and disengaged from a first fixed comb electrode and a second movable comb electrode that is interdigitatably engaged with and disengaged from a second fixed comb electrode, disposed at opposite surfaces of the movable unit along the vibrating direction in which the vibration occurs. An electret is formed at least at either one of the first movable comb electrode and the first fixed comb electrode and at least at either one of the second movable comb electrode and the second fixed comb electrode. The vibration-driven energy harvester may further include a first stopper, which is disposed at a position located on the side of the movable unit toward the first fixed comb electrode and a second stopper, which is disposed at a position located on the side of the movable unit toward the second fixed comb electrode, to be used for purposes of regulating the amplitude of the vibration of the movable unit.

As the movable unit vibrates, the area over which the first movable comb electrode and the first fixed comb electrode face opposite each other changes. When the area over which the first movable comb electrode and the first fixed comb electrode face opposite each other increases, for instance, the area over which the second movable comb electrode and the second fixed comb electrode face opposite each other decreases. In contrast, when the area over which the first movable comb electrode and the first fixed comb electrode face opposite each other decreases, the area over which the second movable comb electrode and the second fixed comb electrode face opposite each other increases. As the facing areas change as described above, electric charges induced via the electrets also change. As a result, the voltage between the first movable comb electrode and the first fixed comb electrode and the voltage between the second movable comb electrode and the second fixed comb electrode change and power is thus generated (see PTL1).
JP2011087384 discloses a method manufacturing an electret in a minute gap electrostatic induction conversion elements. By way of illustration a power generation device is shown, with H-shaped element that is by the surrounding base material by a holding member that functions as a spring and allows the H-shaped element to vibrate relative to the base.
The H shaped element has a column of electrodes the protrude from the left side of the H shape and can move along with vibration of the H-shape. The protruding electrodes are interdigitated with fixed protruding electrodes on the base material, on the left side of the H-shape. Mirror symmetrically, electrodes are present that protrude from the right side of the H-shape, interdigitated with fixed protruding electrodes on the base. The electrets are manufactured on the protruding electrodes in the spaces between the protruding electrodes on the H-shape element and the base.
EP3550714 and EP3352365 shows a vibrational energy harvester with a similar structure. In EP3550714, power generation is increased without increasing the size of the device by supporting the movable H-shaped element with the electrostatic forces in a mutually balanced state. Thus, the vibration center position is positioned at the position of the stable point even while the movable portion is vibrating.
EP3352365 reduces air damping by including teeth on the electrodes, which extend perpendicularly to the length direction of the electrodes. Elastic stoppers are provided between the base and the movable element for limiting travel of the movable element in a direction lateral to the vibration.

### CITATION LIST

### PATENT LITERATURE

PTL1; Japanese Laid Open Patent Publication No. 2018 - 088780
JP2011087384
EP3550714
EP3352365

### SUMMARY OF INVENTION

### TECHNICAL PROBLEM

If the vibration-driven energy harvester disclosed in PTL1 is installed so that the movable unit vibrates along the vertical direction relative to the ground, the movable unit moves toward the ground due to its own weight. For instance, when it is set in a vertical orientation with the first movable comb electrode positioned more toward the ground relative to the second movable comb electrode, the first movable comb electrode will move toward the ground. This means that the gap distance, i.e., the distance representing the gap between the front end of the first movable comb electrode and the facing surface of the first fixed comb electrode that faces opposite the front end of the first movable comb electrode will become smaller than the gap distance measured when the vibration-driven energy harvester is set in a horizontal orientation. In an alternative configuration, the gap distance between one end of the first movable comb electrode and the first stopper in a vertical orientation will become smaller than the gap distance measured when the vibration-driven energy harvester is set in a horizontal orientation. Under these circumstances, even a slight vibration of the movable unit will cause the front end of the first movable comb electrode to come into contact with the facing surface of the first fixed comb electrode, and the one end of the first movable comb electrode will come into contact with the first stopper in the alternative configuration. Either way, the amplitude of the vibration of the movable unit will become smaller, to result in reduced power generation efficiency for the vibration-driven energy harvester.

### SOLUTION TO PROBLEM

According to a 1st aspect of the present invention a vibration-driven energy harvester according to claim 1 is provided.

According to a 2nd aspect of the present invention, in the vibration-driven energy harvester according to the 1st aspect, it is preferable that when the first movable electrode is positioned closer to the ground relative to the second movable electrode, the gap distance between the front end of the first movable electrode and the facing surface of the first fixed electrode facing the front end of the first movable electrode is equal to or greater than the gap distance between the front end of the second movable electrode and the facing surface of the second fixed electrode facing the front end of the second movable electrode.

According to a 3rd aspect of the present invention, in the vibration-driven energy harvester according to the 1st or 2nd aspect, it is preferable that a distance between the fixed end of the elastic support member and the facing surface of the first fixed electrode facing the front end of the first movable electrode is greater than a distance between the fixed end of the elastic support member and the facing surface of the second fixed electrode facing the front end of the second movable electrode.

According to a 4th aspect of the present invention, in the vibration-driven energy harvester according to any one of the 1st through 3rd aspects, it is preferable that the first fixed electrode and the second fixed electrode each include a plurality of comb teeth; and the comb teeth of the first fixed electrode have a length greater than a length of the comb teeth of the second fixed electrode.

According to a 5th aspect of the present invention, in the vibration-driven energy harvester according to any one of the 1st through 3rd aspects, it is preferable that the first movable electrode and the second movable electrode each include a plurality of comb teeth; and the comb teeth of the first movable electrode have a length greater than a length of the comb teeth of the second movable electrode.

According to a 6th aspect of the present invention a vibration-driven energy harvester according to claim 6 is provided.

According to a 7th aspect of the present invention, in the vibration-driven energy harvester according to the 6th aspect, it is preferable that a gap distance between a front end of the first movable electrode and a facing surface of the first fixed electrode facing the front end of the first movable electrode is equal to or greater than a gap distance between a front end of the second movable electrode and a facing surface of the second fixed electrode facing the front end of the second movable electrode.

According to an 8th aspect of the present invention, in the vibration-driven energy harvester according to the 6th aspect, it is preferable that the first facing area length is smaller than the second facing area length and the vibration-driven energy harvester is designed to be used with the first movable electrode positioned closer the ground relative to the second movable electrode.

According to a 9th aspect of the present invention, in the vibration-driven energy harvester according to the 6th aspect, it is preferable that a distance between the fixed end of the elastic support member and a facing surface of the first fixed electrode facing a front end of the first movable electrode is smaller than a distance between the fixed end of the elastic support member and a facing surface of the second fixed electrode facing a front end of the second movable electrode.

According to a 10th aspect of the present invention, in the vibration-driven energy harvester according to any one of the 6th through 9th aspects, it is preferable that the comb teeth of the first fixed electrode have a length smaller than a length of the comb teeth of the second fixed electrode.

According to an 11th aspect of the present invention a vibration-driven energy harvester according to claim 11 is provided.

According to a 12th aspect of the present invention, in the vibration-driven energy harvester according to the 11th aspect, it is preferable that the gap distance between the one end of the movable assembly and the first stopper is greater than the gap distance between the other end of the movable assembly and the second stopper; and when the first movable electrode is positioned closer to the ground relative to the second movable electrode, the gap distance between the one end of the movable assembly and the first stopper is substantially equal to or greater than the gap distance between the other end of the movable assembly and the second stopper.

According to a 13th aspect of the present invention a vibration-driven energy harvester according to claim 13 is provided.

According to a 14th aspect of the present invention, in the vibration-driven energy harvester according to the 13th aspect, it is preferable that when the first movable electrode is positioned closer to the ground relative to the second movable electrode, the electrostatic force acting between the second movable electrode and the second fixed electrode is greater than the electrostatic force acting between the first movable electrode and the first fixed electrode.

According to a 15th aspect of the present invention, in the vibration-driven energy harvester according to the 14th aspect, it is preferable that a charging voltage at the second electret is greater than a charging voltage at the first electret.

According to a 16th aspect of the present invention, in the vibration-driven energy harvester according to the 14th or 15th aspect, it is preferable that the first fixed electrode and the second fixed electrode each include a plurality of comb teeth; and the first movable electrode includes a plurality of comb teeth and the second movable electrode includes a plurality of comb teeth, respectively to be interdigitated with the first fixed electrode and the second fixed electrode.

According to a 17th aspect of the present invention, in the vibration-driven energy harvester according to the 16th aspect, it is preferable that the comb teeth at the second movable electrode are greater in quantity in comparison to the comb teeth at the first movable electrode; and the comb teeth at the second fixed electrode are greater in quantity than the comb teeth at the first fixed electrode.

According to a 18th aspect of the present invention, in the vibration-driven energy harvester according to the 16th aspect, it is preferable that the comb teeth at the second movable electrode have a thickness greater than a thickness of the comb teeth at the first movable electrode; and the comb teeth at the second fixed electrode have a thickness greater than a thickness of the comb teeth at the first fixed electrode.

According to a 19th aspect of the present invention, in the vibration-driven energy harvester according to the 16th aspect, it is preferable that a gap between the comb teeth of the second fixed electrode and the comb teeth of the second movable electrode is smaller than a gap between the comb teeth of the first fixed electrode and the comb teeth of the first movable electrode.

According to a 20th aspect of the present invention, in the vibration-driven energy harvester according to any one of the 1st through 19th aspects, it is preferable that the movable assembly includes a movable unit supported by the elastic support member and a weight fixed to the movable unit.

### ADVANTAGEOUS EFFECTS OF INVENTION

According to the present invention, the extent to which power generation efficiency is lowered due to the force of gravity acting on the movable unit can be minimized.

### BRIEF DESCRIPTION OF DRAWINGS

Fig. 1 is a plan view, schematically illustrating a structure of a vibration-driven energy harvester according to a first embodiment of the present invention, disposed in a horizontal orientation.
Fig. 2 shows the vibration-driven energy harvester in Fig. 1 disposed in a vertical orientation relative to the ground.
Fig. 3 is a plan view, schematically illustrating the structure of the vibration-driven energy harvester according to a second embodiment of the present invention, disposed in a horizontal orientation.
Fig. 4 shows the vibration-driven energy harvester in Fig. 3 disposed in a vertical orientation relative to the ground.
Fig. 5 is a plan view, schematically illustrating the structure of the vibration-driven energy harvester according to a third embodiment of the present invention, disposed in a horizontal orientation.
Fig. 6 shows the vibration-driven energy harvester in Fig. 5 in a sectional view taken through line VI-VI.
Fig. 7 shows the vibration-driven energy harvester in Fig. 5 disposed in a vertical orientation relative to the ground.
Fig. 8 is a plan view schematically illustrating the structure of the vibration-driven energy harvester according to a fourth embodiment of the present invention.
Fig. 9 is a schematic diagram illustrating a method for forming an electret in the vibration-driven energy harvester shown in Fig. 8.
Fig. 10 is a schematic diagram in continuation from Fig. 9, illustrating the method for forming an electret in the vibration-driven energy harvester.
Fig. 11 is a plan view, schematically illustrating the structure of the vibration-driven energy harvester according to a fifth embodiment of the present invention, disposed in a horizontal orientation.
Fig. 12 is a plan view, schematically illustrating the structure of the vibration-driven energy harvester according to a sixth embodiment of the present invention, disposed in a horizontal orientation.
Fig. 13 is a plan view, schematically illustrating the structure of the vibration-driven energy harvester according to a seventh embodiment of the present invention, disposed in a horizontal orientation.
Fig. 14A is a sectional view taken through line XIVA - XIVA in Fig. 13.
Fig. 14B is a sectional view taken through line XIVB - XIVB in Fig. 13.
Fig. 15 is a plan view, schematically illustrating the structure of the vibration-driven energy harvester according to an eighth embodiment of the present invention, disposed in a horizontal orientation.

### DESCRIPTION OF EMBODIMENTS

### First Embodiment

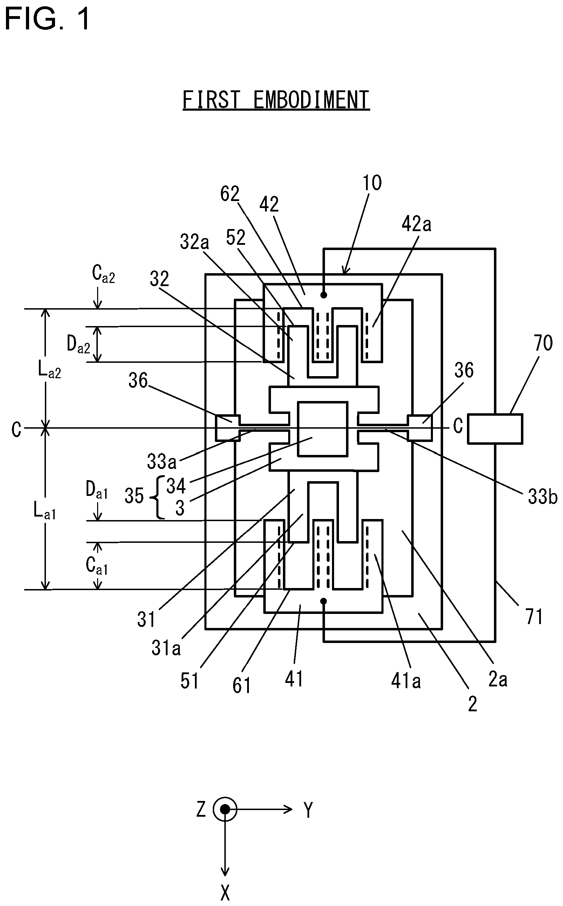

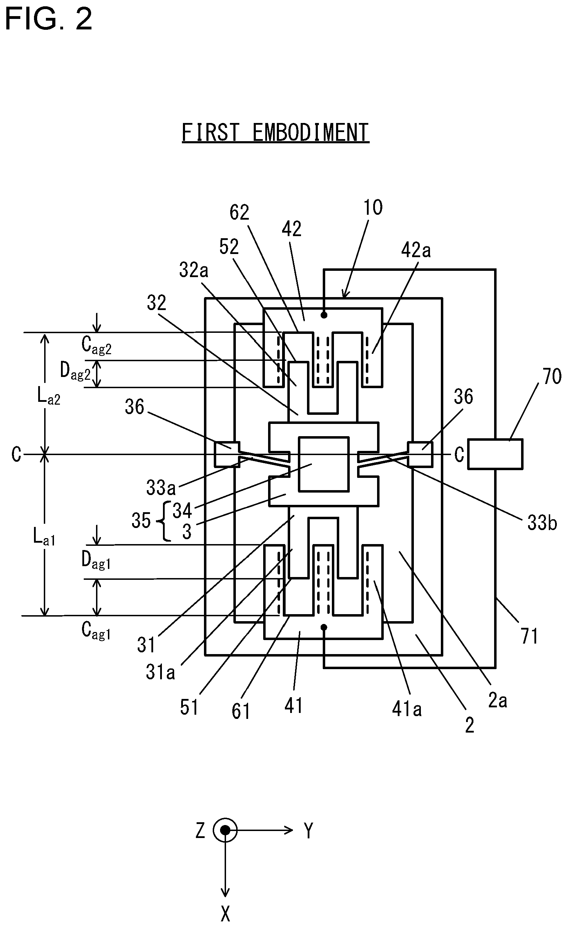

The following is a description of the first embodiment given in reference to Fig. 1 and Fig. 2.

Fig. 1 is a plan view, schematically illustrating a structure of a vibration-driven energy harvester according to the first embodiment of the present invention, disposed in a horizontal orientation.

The following description is given in reference to an X axis, a Y axis and a Z axis running along the directions indicated in the drawings. It is to be noted that in Fig. 1 and Fig. 2, the Z axis extends along a direction running from the back side of the drawing sheet toward the front side of the drawing sheet.

A vibration-driven energy harvester 10 is formed through a standard MEMS machining technology by using, for instance, an SOI (silicon-on-insulator) substrate. The vibration-driven energy harvester 10 comprises a base 2, a movable unit 3, a first movable comb electrode 31 connected to the movable unit 3, a second movable comb electrode 32 connected to the movable unit 3, a pair of elastic support members 33a and 33b that elastically connect the movable unit 3 to the base 2, a first fixed comb electrode 41 that interdigitates with the first movable comb electrode 31 and a second fixed comb electrode 42 that interdigitates with the second movable comb electrode 32.

It is to be noted that in the following explanation, a movable comb electrode and a fixed comb electrode may be simply referred to as a movable electrode and a fixed electrode.

The base 2 may be formed with, for instance, silicon. The movable unit 3, the first movable electrode 31, the second movable electrode 32, the pair of elastic support members 33a and 33b, the first fixed electrode 41 and the second fixed electrode 42 are constituted with an active silicon layer. Although not shown, an inorganic insulating material such as a silicon oxide or a silicon nitride is present between the base 2 and the movable unit 3. The pair of elastic support members 33a and 33b each include fixed ends 36 fixed to the base 2, and the fixed end 36, too, are fixed to the base 2 via an inorganic material such as a silicon oxide or a silicon nitride.

A weight 34 is fixed to the movable unit 3 with glue or the like, and the movable unit 3 and the weight 34 together configure a movable assembly 35. The weight 34 is fixed to the movable unit 3 so as to increase the mass of the movable unit 3 and thus make it possible to generate power efficiently even with a small environmental vibration. However, the movable assembly 35 does not need to include the weight 34 and may be constituted with the movable unit 3 alone.

The first movable electrode 31 includes a plurality of comb teeth 31a set one after another along the Y axis, and the second movable electrode 32 includes a plurality of comb teeth 32a set one after another along the Y axis. As explained earlier, the movable unit 3, the first movable electrode 31, the second movable electrode 32 and the pair of elastic support members 33a and 33b are formed as an integrated unit through MEMS machining.

The first fixed electrode 41 is disposed on the + side along the X axis relative to the first movable electrode 31. The first fixed electrode 41 includes a plurality of comb teeth 41a that are interdigitated with the individual comb teeth 31a of the first movable electrode 31. The second fixed electrode 42 is disposed on the - side along the X axis relative to the second movable electrode 32. The second fixed electrode 42 includes a plurality of comb teeth 42a that are interdigitated with the individual comb teeth 32a of the second movable electrode 32.

The first fixed electrode 41 and the second fixed electrode 42 are electrically connected to a load 70 via a connector lead 71.

An opening 2a is formed at the base 2 and the movable unit 3, the first movable electrode 31, the second movable electrode 32 and the elastic support members 33a and 33b excluding their fixed ends 36 are disposed over the opening 2a of the base 2. In addition, the portions of the first fixed electrode 41 and the second fixed electrode 42 excluding the portions thereof that are bonded to the base 2, i.e., the plurality of comb teeth 41a and 42a and part of the portions linking the comb teeth 41a with one another and the comb teeth 42a with one another, are all disposed over the opening 2a. In other words, the portions of the comb teeth 41a and 42a, opposite which the comb teeth 31a and 32a of the movable electrodes 31 and 32 face and relative to which the comb teeth 31a and 32a move, are disposed over the opening 2a.

A first electret is formed at either one of the first movable electrode 31 and the first fixed electrode 41 or at both the first movable electrode 31 and the first fixed electrode 41. In addition, a second electret is formed at either one of the second movable electrode 32 and the second fixed electrode 42 or at both the second movable electrode 32 and the second fixed electrode 42.

The vibration-driven energy harvester 10 is installed at a vibration source to cause the movable unit 3 to vibrate along the X axis. The pair of elastic support members 33a and 33b at the movable unit 3 are formed so as to achieve high levels of rigidity along the Y axis and along the Z axis, and the movable unit 3 is set so that it is primarily engaged in vibration along the X axis. For instance, as the movable unit 3 is displaced toward the + side along the X axis, the facing area over which the comb teeth 42a of the second fixed electrode 42 and the comb teeth 32a of the second movable electrode 32 face opposite each other decreases and the facing area over which the comb teeth 41a of the first fixed electrode 41 and the comb teeth 31a of the first movable electrode 31 face opposite each other increases. As the facing areas change, electric charges induced via the electrets change. Power is generated as the electric charges induced between the first fixed electrode 41 and the first movable electrode 31 and between the second fixed electrode 42 and the second movable electrode 32 change.

The electric power generated at the vibration-driven energy harvester 10 is used to drive the load 70 which may be, for instance, a temperature sensor, a sound pressure sensor or a railway safety device.

Fig. 1 shows the vibration-driven energy harvester 10 set in a horizontal orientation in a stationary state in which the movable unit 3 is not vibrating.

In this state, the elastic support members 33a and 33b are not deformed and extend in a single straight line. The center C-C of the fixed ends 36 of the elastic support members 33a and 33b is set apart from a facing surface 61 of the first fixed electrode 41, opposite which a front end 51 of the first movable electrode 31 faces, by a distance La1. The center C-C of the fixed ends 36 of the elastic support members 33a and 33b is set apart from a facing surface 62 of the second fixed electrode 42, opposite which a front end 52 of the second movable electrode 32 faces, by a distance La2. The distance La1 is set to be greater than the distance La2. In addition, a gap distance Ca2 over which the front end 52 of the second movable electrode 32 is set apart from the facing surface 62 of the second fixed electrode 42 opposite which the front end 52 of the second movable electrode 32 faces is set smaller than a gap distance Ca1 between the front end 51 of the first movable electrode 31 and the facing surface 61 of the first fixed electrode 41 opposite which the front end 51 of the first movable electrode 31 faces.

When the vibration-driven energy harvester 10 is disposed in a horizontal orientation as shown in Fig. 1, the distance from the front ends, along the X axis (along the direction in which the movable unit 3 vibrates), of the comb teeth 41a of the first fixed electrode 41 to the facing surface 61 is greater than the distance from the front ends, along the X axis, of the comb teeth 42a of the second fixed electrode 42 to the facing surface 62. In addition, the length of the comb teeth 31a of the first movable electrode 31, measured along the X axis, is greater than the length of the comb teeth 32a of the second movable electrode 32, measured along the X axis. Furthermore, in this state, the length of the facing area (overlapping area) measured along the X axis, over which the comb teeth 42a of the second fixed electrode 42 face opposite the comb teeth 32a of the second movable electrode 32 (will be referred to as a second facing area length Da2) is greater than the length of the facing area measured along the X axis, over which the comb teeth 41a of the first fixed electrode 41 and the comb teeth 31a of the first movable electrode 31 face opposite each other (will be referred to as a first facing area length Da1).

Fig. 2 shows the vibration-driven energy harvester in Fig. 1, set in a vertical orientation relative to level ground, i.e., the vibration-driven energy harvester is positioned to assume a vertical attitude. Namely, the vibration-driven energy harvester 10 in Fig. 2 assumes an attitude (vertical orientation) in which the first fixed electrode 41 takes a position closer to the ground (downward) relative to the second fixed electrode 42, in comparison to the state illustrated in Fig. 1. In the description of the embodiment, the mounting attitude of the vibration-driven energy harvester set vertically relative to the ground will be referred to as a vertical attitude or a vertical orientation.

It is to be noted that when the vibration-driven energy harvester is disposed at an angle other than 90° to the ground, too, the first fixed electrode 41 will be set closer to the ground (downward) than the second fixed electrode 42. Under such a condition, the movable assembly 35, causing the elastic support members 33a and 33b to flex under the force of gravity, will be displaced more toward the ground compared to the state shown in Fig. 1. As the movable assembly 35 descends toward the ground, the first movable electrode 31 and the second movable electrode 32 will move downward.

Thus, a gap distance Cag1 over which the front end 51 of the first movable electrode 31 is set apart from the facing surface 61 of the first fixed electrode 41 opposite which the front end 51 of the first movable electrode 31 faces in this state is smaller than the gap distance Ca1 over which the front end 51 of the first movable electrode 31 is set apart from the facing surface 61 of the first fixed electrode 41 opposite which the front end 51 of the first movable electrode 31 faces in Fig. 1 showing the vibration-driven energy harvester 10 set in a horizontal orientation. Furthermore, under the condition shown in Fig. 2, a gap distance Cag2 over which the front end 52 of the second movable electrode 32 is set apart from the facing surface 62 of the second fixed electrode 42 opposite which the front end 52 of the second movable electrode 32 faces is greater than the gap distance Ca2 over which the front end 52 of the second movable electrode 32 is set apart from the facing surface 62 of the second fixed electrode 42 opposite which the front end 52 of the second movable electrode 32 faces in Fig. 1 showing the vibration-driven energy harvester 10 set in a horizontal orientation.

The gap distance Cag1 between the front end 51 of the first movable electrode 31 and the facing surface 61 of the first fixed electrode 41 opposite which the front end 51 of the first movable electrode 31 faces is set equal to or greater than the gap distance Cag2 between the front end 52 of the second movable electrode 32 and the facing surface 62 of the second fixed electrode 42 opposite which the front end 52 of the second movable electrode 32 faces.

This means that as the movable assembly 35 installed at the vibration source vibrates, the front end 51 of the first movable electrode 31 does not come into contact with the facing surface 61 of the first fixed electrode 41 until the front end 52 of the second movable electrode 32 comes into contact with the facing surface 62 of the second fixed electrode 42. Thus, the extent to which the power generation efficiency of the vibration-driven energy harvester 10 is lowered due to gravity acting on the movable assembly 35 can be minimized when the first fixed electrode 41 is positioned more toward the ground relative to the second fixed electrode 42 as shown in Fig. 2.

When the vibration-driven energy harvester 10 set in a horizontal orientation as shown in Fig. 1 is arranged to a vertical orientation as shown in Fig. 2, the gap distance Ca2 over which the front end 52 of the second movable electrode 32 is set apart from the facing surface 62 of the second fixed electrode 42 opposite which the front end 52 faces, increases and the gap distance Ca1 over which the front end 51 of the first movable electrode 31 is set apart from the facing surface 61 of the first fixed electrode 41, opposite which the front end 51 faces, decreases.

As explained earlier, when the vibration-driven energy harvester 10 is set in a horizontal orientation as shown in Fig. 1, the gap distance Ca2 between the front end 52 of the second movable electrode 32 and the facing surface 62 of the second fixed electrode 42 opposite which the front end 52 of the second movable electrode 32 faces is set smaller than the gap distance Ca1 between the front end 51 of the first movable electrode 31 and the facing surface 61 of the first electrode 41 opposite which the front end 51 of the first movable electrode 31 faces.

Namely, as the vibration-driven energy harvester 10 is shifted to a vertical orientation as shown in Fig. 2, the length (first facing area length Da1) of the area over which the comb teeth 31a of the first movable electrode 31 and the comb teeth 41a of the first fixed electrode 41 face opposite each other increases, whereas the length (second facing area length Da2) of the area over which the comb teeth 32a of the second movable electrode 32 and the comb teeth 42a of the second fixed electrode 42 face opposite each other decreases. This means that as the vibration-driven energy harvester 10 is arranged in a vertical orientation as shown in Fig. 2, the first facing area length Dag1 and the second facing area length Dag2 become closer to each other. Through this process, it becomes possible to more closely match the electret-induced voltage in the area between the comb teeth 31a of the first movable electrode 31 and the comb teeth 41a of the first fixed electrode 41 with the electret-induced voltage in the area between the comb teeth 32a of the second movable electrode 32 and the comb teeth 42a of the second fixed electrode 42. At the vibration-driven energy harvester 10 set in a vertical orientation, the first facing area length Dag1 and the second facing area length Dag2 can be set equal to each other, as well. However, the first facing area length Dag1 and the second facing area Dag2 do not need to be equal to each other.

In the structural example described above, the gap distance Ca2 between the front end 52 of the second movable electrode 32 and the facing surface 62 of the second fixed electrode 42 opposite which the front end 52 of the second movable electrode 32 faces is set smaller than the gap distance Ca1 between the front end 51 of the first movable electrode 31 and the facing surface 61 of the first fixed electrode 41 opposite which the front end 51 of the first movable electrode 31 faces when a horizontal orientation is assumed. However, if either the gap distance Ca2 or the gap distance Ca1, whichever is greater value, is positioned closer to the ground, the first facing area length Dag1 and the facing area length Dag2 become closer to each other at the vibration-driven energy harvester 10 set in a vertical orientation. This means that the vibration-driven energy harvester 10 is simply required to adopt a structure in which the first facing area length Da1 over which the comb teeth 31a of the first movable electrode 31 face opposite the comb teeth 41a of the first fixed electrode 41 is different from the second facing area length Da2 over which the comb teeth 32a of the second movable electrode 32 face opposite the comb teeth 42a of the second fixed electrode 42 when a horizontal orientation is assumed.

The following operational advantages are achieved through the first embodiment described above.
(1) The vibration-driven energy harvester 10 comprises a base 2, a movable assembly 35 that includes a first movable electrode 31 and a second movable electrode 32, a first fixed electrode 41 disposed so as to face opposite the first movable electrode 31, a second fixed electrode 42 disposed so as to face opposite the second movable electrode 32 and elastic support members 33a and 33b each having a fixed end 36 fixed to the base 2, which elastically support the movable assembly 35, with a first electret disposed at least at either one of the first movable electrode 31 and the first fixed electrode 41 and a second electret disposed at least at either one of the second movable electrode 32 and the second movable electrode 42.
   In this vibration-driven energy harvester 10, a gap distance Ca2 between a front end 52 of the second movable electrode 32 and a facing surface 62 of the second fixed electrode 42 opposite which the front end 52 of the second movable electrode 32 faces is different from a gap distance Ca1 between a front end 51 of the first movable electrode 31 and a facing surface 61 of the first fixed electrode 41 opposite which the front end 51 of the first movable electrode 31 faces. Thus, by positioning the comb electrode structure corresponding to the gap distance Ca1 or the gap distance Ca2, whichever gap distance is greater, closer to the ground side than the comb electrode structure with the smaller gap distance when installing the vibration-driven energy harvester at the vibration source, it is ensured that the movable assembly 35 is able to vibrate with a greater amplitude, in comparison to the amplitude of vibration achieved at a vibration-driven energy harvester having a gap distance Ca1 and a gap distance Ca2 equal to each other. Through these measures, the extent to which the power generation efficiency of the vibration-driven energy harvester 10 is lowered due to gravity acting on the movable assembly 35 can be minimized.
(2) When the first movable electrode 31 is positioned closer to the ground relative to the second movable electrode 32 at the vibration-driven energy harvester 10 described above, a gap distance Cag1 between the front end 51 of the first movable electrode 31 and the facing surface 61 of the first fixed electrode 41 opposite which the front end 51 of the first movable electrode 31 faces is equal to or greater than a gap distance Cag2 between the front end 52 of the second movable electrode 32 and the facing surface 62 of the second fixed electrode 42 opposite which the front end 52 of the second movable electrode 32 faces. This means that if the movable assembly 35 vibrates with the first fixed electrode 41 positioned more toward the ground relative to the second fixed electrode 42 at the vibration-driven energy harvester 10, the extent to which the power generation efficiency of the vibration-driven energy harvester 10 is lowered due to gravity acting on the movable assembly 35 can be minimized.
(3) The vibration-driven energy harvester 10 assumes a structure in which a distance La1 setting apart the fixed ends 36 of the elastic support members 33a and 33b from the facing surface 61 of the first fixed electrode 41 opposite which the front end 51 of the first movable electrode 31 faces is greater than a distance La2 setting apart the fixed ends 36 of the elastic support members 33a and 33b from the facing surface 62 of the second fixed electrode 42 opposite which the front end 52 of the second movable electrode 32 faces. Since the distance La2 is set smaller than the distance La1 instead of setting it equal to the distance La1, the length of the vibration-driven energy harvester 10 measured along the vibrating direction can be reduced, which ultimately contributes to miniaturization of the vibration-driven energy harvester 10. In other words, by adopting asymmetrical comb tooth structures as in the embodiment, miniaturization of the vibration-driven energy harvester can be achieved. In contrast, if a vibration-driven energy harvester having a pair of a movable electrode and a fixed electrode assumes identical comb tooth structures for the movable electrode and the fixed electrode by matching the dimensions of the second movable electrode and the second fixed electrode in the example presented in Fig. 1 and Fig. 2, with the dimensions of the first movable electrode and the first fixed electrode, such adoption of identical comb tooth structures is bound to increase the size of the vibration-driven energy harvester.

### Second Embodiment

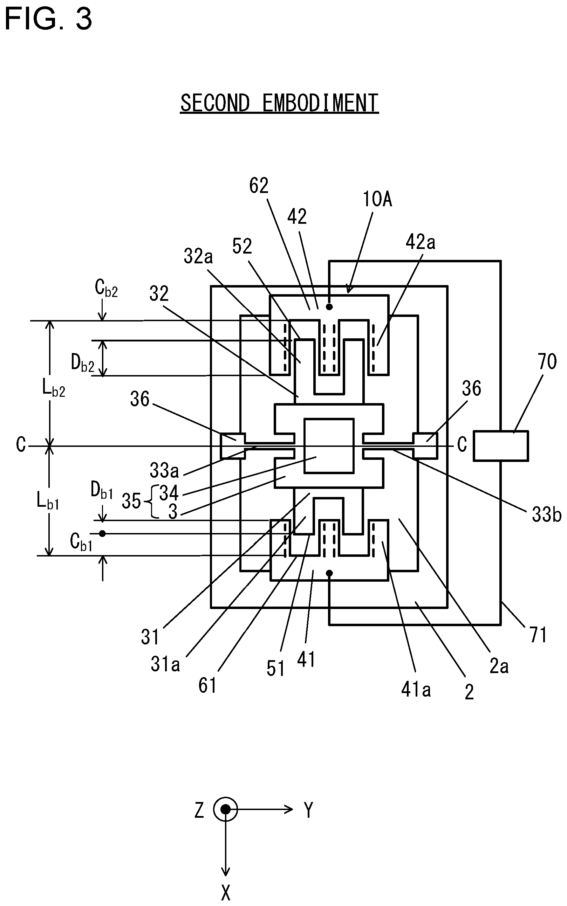

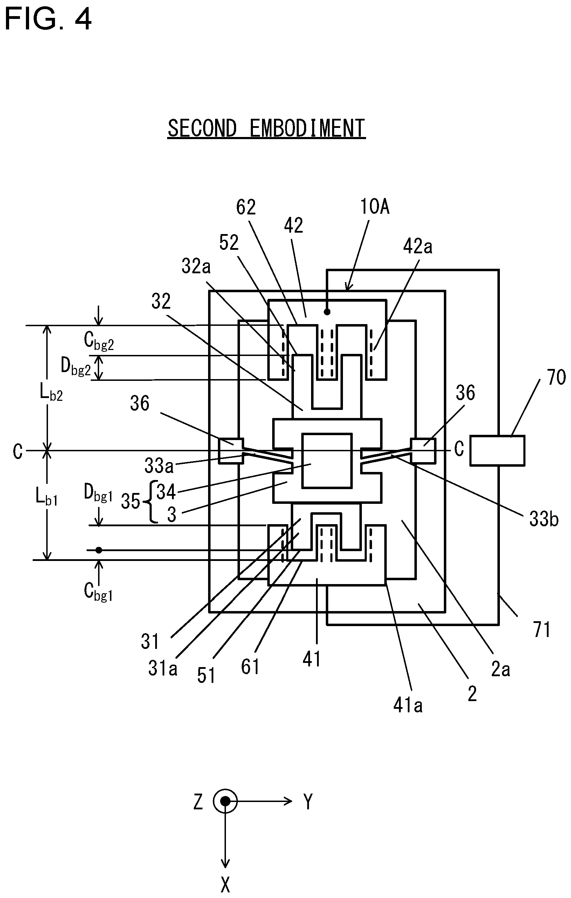

The following is a description of the second embodiment given in reference to Fig. 3 and Fig. 4.

Fig. 3 is a plan view, schematically illustrating the structure of the vibration-driven energy harvester achieved in the second embodiment of the present invention, disposed in a horizontal orientation.

A vibration-driven energy harvester 10A shown in Fig. 3 is distinguishable from the first embodiment in Fig. 1 in that a distance Lb1 setting apart the fixed ends 36 of the elastic support members 33a and 33b from the facing surface 61 of the first fixed electrode 41 opposite which the front end 51 of the first movable electrode 31 faces is set smaller than a distance Lb2 setting apart the fixed ends 36 of the elastic support members 33a and 33b from the facing surface 62 of the second fixed electrode 42 opposite which the front end 52 of the second movable electrode 32 faces. The second embodiment is further distinguishable from the first embodiment in that a gap distance Cb2 between the front end 52 of the second movable electrode 32 and the facing surface 62 of the second fixed electrode 42 opposite which the front end 52 of the second movable electrode 32 faces and a gap distance Cb1 between the front end 51 of the first movable electrode 31 and the facing surface 61 of the first fixed electrode 41 opposite which the front end 51 of the first movable electrode 31 faces are substantially equal to each other.

The following explanation will focus on the features of the second embodiment distinguishable from those of the first embodiment without providing any repeated description of structural features similar to those of the first embodiment.

As described above, the distance Lb1 setting apart the center C-C of the fixed ends 36 of the elastic support members 33a and 33b from the facing surface 61 of the first fixed electrode 41 is set smaller than the distance Lb2 setting apart the center C-C of the fixed ends 36 of the elastic support members 33a and 33b from the facing surface 62 of the second fixed electrode 42 at the vibration-driven energy harvester 10A achieved in the second embodiment. In addition, the gap distance Cb2 and the gap distance Cb1 are substantially equal to each other.

In the vibration-driven energy harvester 10A shown in Fig. 3, too, the length of the facing area measured along the X axis, over which the comb teeth 42a of the second fixed electrode 42 face opposite the comb teeth 32a of the second movable electrode 32 (will be referred to as a second facing area length Db2) is greater than the length of the facing area measured along the X axis, over which the comb teeth 41a of the first fixed electrode 41 and the comb teeth 31a of the first movable electrode 31 face opposite each other (will be referred to as a first facing area length Db1). However, the length (Db1 + Cb1) of the comb teeth 41a of the first fixed electrode 41 is smaller than the length (Db2 + Cb2) of the comb teeth 42a of the second fixed electrode 42.

Fig. 4 shows the vibration-driven energy harvester in Fig. 3, disposed in a vertical orientation relative to level ground. Namely, the vibration-driven energy harvester 10A in Fig. 4 assumes a state in which the first fixed electrode 41 takes a position closer to the ground relative to the second fixed electrode 42, in comparison to the state illustrated in Fig. 3.

Under such a condition, the movable assembly 35, causing the elastic support members 33a and 33b to flex under the force of gravity, is displaced more toward the ground compared to the state shown in Fig. 3. As the movable assembly 35 descends toward the ground, the first movable electrode 31 and the second movable electrode 32 move downward. Thus, a gap distance Cbg1 over which the front end 51 of the first movable electrode 31 is set apart from the facing surface 61 of the first fixed electrode 41 opposite which the front end 51 of the first movable electrode 31 faces in this state is smaller than the gap distance Cb1 over which the front end 51 of the first movable electrode 31 is set apart from the facing surface 61 of the first fixed electrode 41 opposite which the front end 51 of the first movable electrode 31 faces with the vibration-driven energy harvester 10A set in a horizontal orientation as in the configuration shown in Fig. 2 of the first embodiment.

Furthermore, under the condition shown in Fig. 4, a gap distance Cbg2 over which the front end 52 of the second movable electrode 32 is set apart from the facing surface 62 of the second fixed electrode 42 opposite which the front end 52 of the second movable electrode 32 faces is greater than the gap distance Cb2 over which the front end 52 of the second movable electrode 32 is set apart from the facing surface 62 of the second fixed electrode 42 opposite which the front end 52 of the second movable electrode 32 faces in the vibration-driven energy harvester 10A set in a horizontal orientation.

In addition, in the state illustrated in Fig. 4, the length of the facing area measured along the X axis, over which the comb teeth 42a of the second fixed electrode 42 and the comb teeth 32a of the second movable electrode 32 face opposite each other (second facing area length Dbg2) and the length of the facing area measured along the X axis, over which the comb teeth 41a of the first fixed electrode 41 and the comb teeth 31a of the first movable electrode 31 face opposite each other (first facing area length Dbg1) are substantially equal to each other. Thus, the gap distance Cbg1 between the front end 51 of the first movable electrode 31 and the facing surface 61 of the first fixed electrode 41 opposite which the front end 51 of the first movable electrode 31 faces is smaller than the gap distance Cbg2 between the front end 52 of the second movable electrode 32 and the facing surface 62 of the second fixed electrode 42 opposite which the front end 52 of the second movable electrode 32 faces. It is to be noted, however, that the front end 51 of the first movable electrode 31 is set so that the front end 51 of the first movable electrode 31 does not come into contact with the facing surface 61 of the first fixed electrode 41 opposite which the front end 51 of the first movable electrode 31 faces, i.e., so that the gap distance Cbg1 never becomes equal to or less than zero.

Consequently, at the vibration-driven energy harvester achieved in the second embodiment, too, the front end 51 of the first movable electrode 31 does not come into contact with the facing surface 61 of the first fixed electrode 41 opposite which the front end 51 of the first movable electrode 31 faces or the front end 52 of the second movable electrode 32 does not come into contact with the facing surface 62 of the second fixed electrode 42 opposite which the front end 52 of the second movable electrode 32 faces, even as the movable assembly 35 is caused to vibrate by an environmental vibration. Thus, even when the first fixed electrode 41 is positioned more toward the ground relative to the second fixed electrode 42 at the vibration-driven energy harvester 10A as shown in Fig. 4, the extent to which the power generation efficiency of the vibration-driven energy harvester 10A is lowered can be minimized.

In the second embodiment, the distance Lb1 setting apart the center C-C of the fixed ends 36 of the elastic support members 33a and 33b from the facing surface 61 of the first fixed electrode 41 opposite which the front end 51 of the first movable electrode 31 faces is set smaller than the distance Lb2 setting apart the center C-C of the fixed ends 36 of the elastic support members 33a and 33b from the facing surface 62 of the second fixed electrode 42 opposite which the front end 52 of the second movable electrode 32 faces. This allows the vibration-driven energy harvester 10A in the second embodiment to assume a smaller length along the vibrating direction and thus allows the vibration-driven energy harvester 10A to be provided as a more compact unit in comparison to the vibration-driven energy harvester in the first embodiment.

It is to be noted that in the structural example described above, the second facing area length Db2 of the facing area over which the comb teeth 42a of the second fixed electrode 42 and the comb teeth 32a of the second movable electrode 32 face opposite each other is greater than the first facing area length Db1 of the facing area over which the comb teeth 41a of the first fixed electrode 41 and the comb teeth 31a of the first movable electrode 31 face opposite each other. However, if either the second facing area length Db2 or the first facing area length Db1, whichever is smaller, is positioned more toward the ground, the second facing area length Db2 and the first facing area length Db1 will become closer to each other at the vibration-driven energy harvester 10A set in a vertical orientation. This means that the vibration-driven energy harvester is simply required to adopt a structure in which the first facing area length Db1 over which the comb teeth 41a of the first fixed electrode 41 face opposite the comb teeth 31a of the first movable electrode 31 is different from the second facing area length Db2 of the facing area over which the comb teeth 42a of the second fixed electrode 42 face opposite the comb teeth 32a of the second movable electrode 32 when a horizontal orientation is assumed.

In addition, in the structural example achieved in the second embodiment described above, the gap distance Cb2 between the front end 52 of the second movable electrode 32 and the facing surface 62 of the second fixed electrode 42 opposite which the front end 52 of the second movable electrode 32 faces and the gap distance Cb1 between the front end 51 of the first movable electrode 31 and the facing surface 61 of the first fixed electrode 41 opposite which the front end 51 of the first movable electrode 31 faces are substantially equal to each other. However, the gap distance Cb1 may be set greater than the gap distance Cb2. It is to be noted that it is more advantageous to set the gap distance Cb1 and the gap distance Cb2 substantially equal to each other for purposes of reducing the length of the vibration-driven energy harvester 10A, measured along the vibrating direction, i.e., for purposes of miniaturization of the vibration-driven energy harvester 10A.

The following operational advantages are achieved through the second embodiment described above.
(1) The vibration-driven energy harvester 10A comprises a base 2, a movable assembly 35 having a first movable electrode 31 which includes a plurality of comb teeth 31a and a second movable electrode 32 which includes a plurality of comb teeth 32a, a first fixed electrode 41 disposed so as to face opposite the first movable electrode 31, which includes a plurality of comb teeth 41a, a second fixed electrode 42 disposed so as to face opposite the second movable electrode 32, which includes a plurality of comb teeth 42a, elastic support members 33a and 33b each having a fixed end 36 fixed to the base 2, which support the movable assembly 35, a first electret formed at least at either one of the first movable electrode 31 and the first fixed electrode 41, and a second electret formed at least at either one of the second movable electrode 32 and the second fixed electrode 42. A first facing area length Db1 of the facing area over which the comb teeth 31a of the first movable electrode 31 and the comb teeth 41a of the first fixed electrode 41 face opposite each other is different from a second facing area length Db2 of the facing area over which the comb teeth 32a of the second movable electrode 32 and the comb teeth 42a of the second fixed electrode 42 face opposite each other. This means that by positioning the first facing area length Db1 or the second facing area length Db2, whichever is smaller, closer to the ground compared to the greater facing area length when installing the vibration-driven energy harvester at a vibration source, the first facing area length Dbg1 and the second facing area length Dbg2 can be adjusted closer to each other. Through these measures, the extent to which the power generation efficiency of the vibration-driven energy harvester 10A is lowered due to gravity acting on the movable assembly 35 can be minimized.
(2) At the vibration-driven energy harvester 10A, a gap distance Cb1 between the front end 51 of the first movable electrode 31 and the facing surface 61 of the first fixed electrode 41 opposite which the front end 51 of the first movable electrode 31 faces is equal to or greater than a gap distance Cb2 between the front end 52 of the second movable electrode 32 and the facing surface 62 of the second fixed electrode 42 opposite which the front end 52 of the second movable electrode 32 faces. In this case, the gap distance Cb1 is ample so that the amplitude of the vibration can be increased at the vibration-driven energy harvester installed with the first facing area length Dbg1 positioned closer to the ground relative to the second facing area length Dbg2, since the gap distance Cbg1 corresponding to the first facing area length Dbg1 is great enough to disallow unnecessary restriction on the extent to which the movable unit 3 moves toward the ground.
(3) At the vibration-driven energy harvester 10A in a horizontal orientation the first facing area length Db1 is smaller than the second facing area length Db2. This means that when the vibration-driven energy harvester 10A is set in a vertical orientation relative to the ground so that the first movable electrode 31 is positioned closer to the ground relative to the second movable electrode 32, the first facing area length Db1 will become closer to the second facing area length Db2, or more desirably, they will become substantially equal to each other. Consequently, the amplitude of vibration of the movable assembly 35 can be increased, which, in turn, will make it possible to minimize the extent to which the power generation efficiency of the vibration-driven energy harvester 10A is lowered due to gravity acting on the movable assembly 35.
(4) At the vibration-driven energy harvester 10A, the distance Lb1 setting apart the fixed ends 36 of the elastic support members 33a and 33b from the facing surface 61 of the first fixed electrode 41, opposite which the front ends 51 of the comb teeth 31a of the first movable electrode 31 face, is smaller than the distance Lb2 setting apart the fixed ends 36 of the elastic support members 33a and 33b from the facing surface 62 of the second fixed electrode 42, opposite which the front ends 52 of the comb teeth 32a of the second movable electrode 32 faces. Since this allows the vibration-driven energy harvester 10A to assume a smaller length, measured along the direction in which the movable unit 3 vibrates, the vibration-driven energy harvester 10A can be provided as a more compact unit.
(5) At the vibration-driven energy harvester 10A described above, the comb teeth 41a of the first fixed electrode 41 assume a length smaller than the length of the comb teeth 42a of the second fixed electrode 42. Since this allows the vibration-driven energy harvester 10A to assume a smaller length, measured along the direction in which the movable unit 3 vibrates, the vibration-driven energy harvester 10A can be provided as a more compact unit.

### Third Embodiment

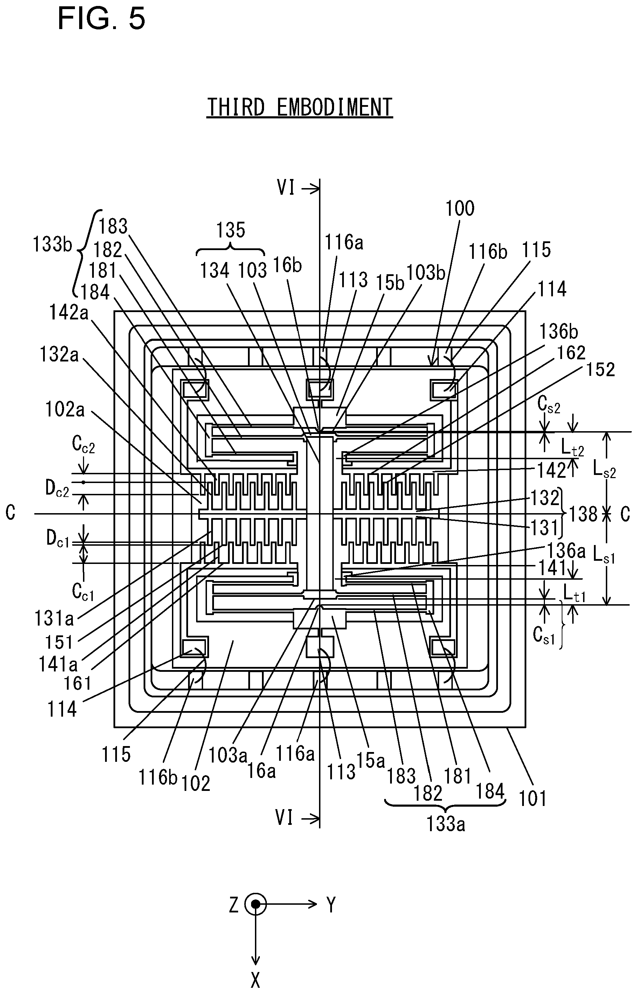

In reference to Figs. 5 through 7, the third embodiment of the present invention will be described.

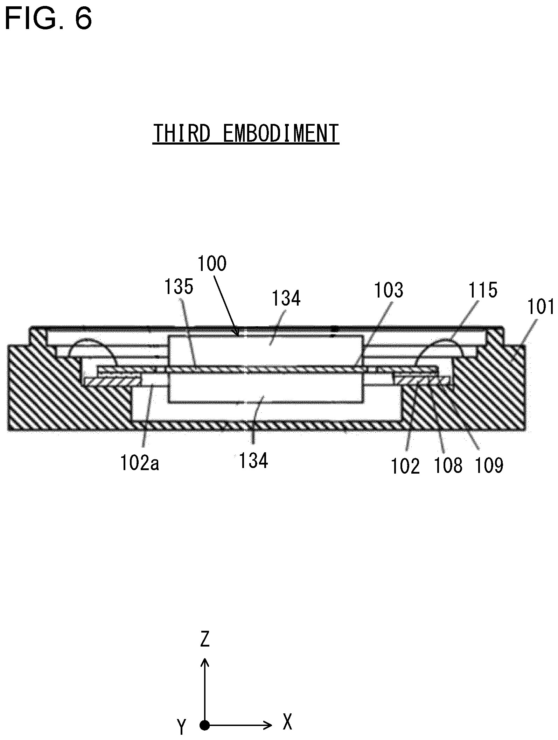

Fig. 5 is a plan view illustrating the vibration-driven energy harvester achieved in the third embodiment of the present invention, disposed in a horizontal orientation. Fig. 6 shows the vibration-driven energy harvester in Fig. 5 in a sectional view taken through line VI - VI.

A vibration-driven energy harvester 100 achieved in the third embodiment is distinguishable from the first embodiment in that it includes a first stopper 15a and a second stopper 15b to be used to regulate the amplitude of vibration of a movable unit 103.

It is to be noted that the third embodiment, too, will be described in reference to the X axis, the Y axis and the Z axis running along the directions indicated in the figures.

The vibration-driven energy harvester 100 is housed inside a case 101. The case 101 may be constituted of an electrically insulating material (e.g., ceramic). An upper lid (not shown) is fused through, for instance, seam welding, to the upper end of the case 101, and the space inside the case 101 is thus sealed to sustain a state of vacuum via the case 101 and the upper lid.

The vibration-driven energy harvester 100 comprises a base 102 constituted of Si, a device layer 109 constituted with an Si active layer and a connecting layer 108 constituted of an inorganic insulating material such as a silicon oxide or a silicon nitride, which connects the base 102 with the device layer 109. In other words, the vibration-driven energy harvester 100 adopts a three-layer structure achieved by laminating the base 102, the connecting layer 108 and the device layer 109 constituted with an Si active layer, one on top of another along the Z axis, as illustrated in Fig. 6. The vibration-driven energy harvester 100 adopting such a structure is normally formed through a standard MEMS machining technology by using an SOI (silicon-on-insulator) substrate.

The movable unit 103, a first movable electrode 131, a second movable electrode 132, a pair of elastic support members 133a and 133b, two first fixed electrodes 141, two second fixed electrodes 142, the first stopper 15a and the second stopper 15b are formed in the device layer 109. A weight 134 is fixed to the movable unit 103 with glue or the like, and the movable unit 103 and the weight 134 together configure a movable assembly 135. The weight 134 is fixed to the movable unit 103 so as to increase the mass of the movable unit 103 and thus make it possible to generate power efficiently even with a small environmental vibration.

The first movable electrode 131 includes a plurality of comb teeth 131a set one after another along the Y axis, and the second movable electrode 132 includes a plurality of comb teeth 132a set one after another along the Y axis. The first movable electrode 131 and the second movable electrode 132 share a common linking portion 138 that links the plurality of comb teeth 131a with the plurality of comb teeth 132a, with the plurality of comb teeth 131a extending from the linking portion 138 toward the + side along the X axis and the plurality of comb teeth 132a extending from the linking portion 138 toward the - side along the X axis. The length of the comb teeth 131a of the first movable electrode 131 measured along the X axis and the length of the comb teeth 132a of the second movable electrode 132 measured along the X axis are substantially equal to each other. However, the comb teeth 131a and the comb teeth 132a may assume lengths different from each other measured along the X axis.

As explained earlier, the movable unit 103, the first movable electrode 131, the second movable electrode 132 and the pair of elastic support members 133a and 133b are formed as an integrated unit through MEMS machining.

At the first fixed electrodes 141, a plurality of comb teeth 141a with which the comb teeth 131a of the first movable electrode 131 interdigitate are disposed one after another along the Y axis. In addition, at the second fixed electrodes 142, a plurality of comb teeth 142a with which the comb teeth 132a of the second movable electrode 132 interdigitate are disposed one after another along the Y axis. The length of the comb teeth 141a of the first fixed electrodes 141, measured along the X axis, and the length of the comb teeth 142a of the second fixed electrodes 142 measured along the X axis are substantially equal to each other. However, the comb teeth 141a and the comb teeth 142a may assume lengths different from each other measured along the X axis.

The elastic support member 133a and the elastic support member 133b each include three support beams 181 through 183 and a pair of support beam linking portions 184 that link the three support beams 181 through 183 with one another at two ends. The support beam 183 disposed in correspondence to the first fixed electrodes 141 at a position set apart from the movable unit 103 over a greatest distance is connected to the first stopper 15a. A projection 16a is formed at the first stopper 15a so as to face opposite one end 103a of the movable unit 103 in the X axis. A side edge of the first stopper 15a, located on the side opposite from the projection 16a, is fixed to the base 102 via the connecting layer 108. At the end of the support beam 181 disposed at a position closest to the movable unit 103, which is located on the side opposite from the support beam linking portions 184, a fixed end 136a is formed, and the fixed end 136a is fixed to the base 102 via the connecting layer 108. The support beam 182 disposed between the support beam 181 and the support beam 183 is linked to one end 103a of the movable unit 103. The elastic support member 133a and the first stopper 15a are formed as an integrated unit through MEMS machining, as has been explained earlier.

The support beam 183 disposed in correspondence to the second fixed electrodes 142 at a position set apart from the movable unit 103 over a greatest distance is connected to the second stopper 15b. A projection 16b is formed at the second stopper 15b so as to face opposite another end 103b of the movable unit 103 in the X axis. A side edge of the second stopper 15b, located on the side opposite from the projection 16b, is fixed to the base 102 via the connecting layer 108. At the end of the support beam 181 disposed at a position closest to the movable unit 103, a fixed end 136b is formed, and the fixed end 136b is fixed to the base 102 via the connecting layer 108. The support beam 182 disposed between the support beam 181 and the support beam 183 is linked to the other end 103b of the movable unit 103. The elastic support member 133b and the second stopper 15b are formed as an integrated unit through MEMS machining, as has been explained earlier.

An opening 102a is formed at the base 102. The movable unit 103, the first movable electrode 131 and the second movable electrode 132 are disposed over the opening 102a of the base 102. The first stopper 15a and the elastic support member 133a, excluding the fixed ends 136a and the portion of the first stopper 15a fixed to the base 102, are disposed over the opening 102a at the base 102. In addition, the second stopper 15b and the elastic support member 133b, excluding the fixed ends 136b and the portion of the second stopper 15b fixed to the base 102, are disposed over the opening 102a at the base 102.

A lead terminal is disposed at each of the first fixed electrodes 141 and the second fixed electrodes 142 and an electrode pad 114, constituted of an electrically conductive metal such as aluminum, is disposed on the lead terminal. In addition, a lead terminal is disposed at each of the first stopper 15a and the second stopper 15b, with an electrode pad 113 constituted of an electrically conductive metal such as aluminum, disposed on the lead terminal. The electrode pads 113 and 114 are connected via wires 115, to electrodes 116a and 116b disposed at the case 101.

The first electret is formed at least at either of the first movable electrode 131 and the first fixed electrodes 141. In addition, the second electret is formed at least at either of the second movable electrode 132 and the second fixed electrodes 142.

As a vibration occurs at a vibration source, the movable unit 103 of the vibration-driven energy harvester 100, installed at the vibration source, is caused to vibrate along the X direction. The pair of elastic support members 133a and 133b are formed so as to achieve high levels of rigidity along the Y axis and along the Z axis while the movable unit 103 is set so that it is primarily engaged in vibration along the X axis. For instance, as the movable unit 103 is displaced toward the + side along the X axis, the facing area over which the comb teeth 142a of the second fixed electrodes 142 and the comb teeth 132a of the second movable electrode 132 face opposite each other decreases and the facing area over which the comb teeth 141a of the first fixed electrodes 141 and the comb teeth 131a of the first movable electrode 131 face opposite each other increases. As the facing areas change, electric charges induced via the electrets change. Power is generated as the electric charge induced between the first fixed electrodes 141 and the first movable electrode 131 and between the second fixed electrodes 142 and the second movable electrode 132 change.

If the movable unit 103 moves toward the + side along the X axis by an extent greater than a specific degree as, for instance, the vibration source vibrates with a great amplitude or as the vibration-driven energy harvester falls down during installation or the like, the one end 103a of the movable unit 103 will come into contact with the projection 16a of the first stopper 15a. If, on the other hand, the movable unit 103 moves toward the - side along the X axis by an extent greater than a specific degree, the other end 103b of the movable unit 103 will come into contact with the projection 16b of the second stopper 15b. In other words, the amplitude of vibration of the movable unit 103 is regulated via the first stopper 15a and the second stopper 15b.

In Fig. 5, the movable unit 103 is not vibrating in the vibration-driven energy harvester 100 set in a horizontal orientation.

In this state, the support beams 181 through 183 at both elastic support members 133a and 133b are not deformed and instead they each extend in a straight line. A gap distance Cs1 between the one end 103a of the movable unit 103 and the projection 16a of the first stopper 15a in this condition is set greater than a gap distance Cs2 between the other end 103b of the movable unit 103 and the projection 16b of the second stopper 15b.

In addition, the length of a facing area over which the comb teeth 132a of the second movable electrode 132 face opposite the comb teeth 142a of the second fixed electrodes 142 (will be referred to as a second facing area length Dc2) is greater than the length of a facing area over which the comb teeth 131a of the first movable electrode 131 face opposite the comb teeth 141a of the first fixed electrodes 141 (will be referred to as a first facing area length Dc1). Furthermore, a gap distance Cc1 between front ends 151 of the comb teeth 131a of the first movable electrode 131 and facing surfaces 161 of the first fixed electrodes 141 opposite which the front ends 151 of the comb teeth 131a of the first movable electrode 131 face is greater than a gap distance Cc2 between front ends 152 of the comb teeth 132a of the second movable electrode 132 and facing surfaces 162 of the second fixed electrodes 142 opposite which the front ends 152 of the comb teeth 132a of the second movable electrode 132 face.

Moreover, in the state illustrated in Fig. 5, a distance Ls1 between a center C-C, in the X axis direction, of the linking portion 138 functioning as a common electrode shared by the first movable electrode 131 and the second movable electrode 132, and the projection 16a of the first stopper 15a is greater than a distance Ls2 between the center C-C in the X axis direction of the linking portion 138 and the projection 16b of the second stopper 15b.

It is to be noted that a distance Lt1 setting apart the fixed end 136a of the elastic support member 133a from the projection 16a of the first stopper 15a and a distance Lt2 setting apart the fixed end 136b of the elastic support member 133b from the projection 16b of the second stopper 15b are substantially equal to each other. However, the distance Lt1 setting apart the fixed end 136a of the elastic support member 133a from the projection 16a of the first stopper 15a may be set greater than the distance Lt2 setting apart the fixed end 136b of the elastic support member 133b from the projection 16b of the second stopper 15b.

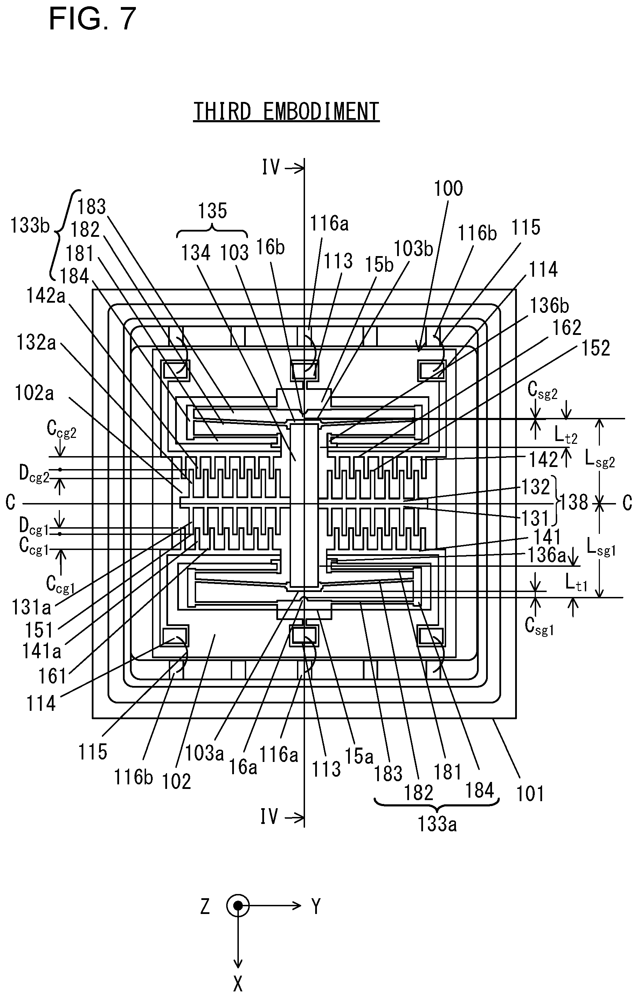

Fig. 7 shows the vibration-driven energy harvester 100 in Fig. 5, set perpendicular to level ground and thus assuming a vertical attitude. The first fixed electrodes 141 of the vibration-driven energy harvester 100 are positioned closer to the ground relative to the second fixed electrodes 142.

Under this condition, the movable assembly 135 descends toward the ground under the force of gravity as the elastic support members 133a and 133b are caused to flex. As a result, a gap distance Csg1 between the one end 103a of the movable unit 103 and the projection 16a of the first stopper 15a in this state is smaller than the gap distance Cs1 between the one end 103a of the movable unit 103 and the projection 16a of the first stopper 15a measured when the vibration-driven energy harvester 100 is set in a horizontal orientation. In contrast, a gap distance Csg2 between the other end 103b of the movable unit 103 and the projection 16b of the second stopper 15b is greater than the gap distance Cs2 between the other end 103b of the movable unit 103 and the projection 16b of the second stopper 16b measured when the vibration-driven energy harvester 100 is set in a horizontal orientation.

It is to be noted that Fig. 7 only shows the support beams 182 linked to the movable unit 103, among the support beams 181 through 183 of the elastic support members 133a and 133b, in a deformed state and does not provide an illustration of deformation of the support beams 181 and 183.

In this state, the gap distance Csg1 between the one end 103a of the movable unit 103 and the projection 16a of the first stopper 15a is set either equal to or greater than the gap distance Csg2 between the other end 103b of the movable unit 103 and the projection 16b of the second stopper 15b.

If a distance Lsg1 between the center C-C taken along the X axis of the linking portion 138 functioning as a common electrode shared by the first movable electrode 131 and the second movable electrode 132, and the projection 16a of the first stopper 15a and a distance Lsg2 between the center C-C taken along the X axis of the linking portion 138 and the projection 16b of the second stopper 15b are equal to each other, the gap distance Csg1 and the gap distance Csg2 will be equal to each other in the state shown in Fig. 7. If, on the other hand, the distance Lsg1 between the center C-C taken along the X axis of the linking portion 138 and the projection 16a of the first stopper 15a is greater than the distance Lsg2 between the center C-C taken along the X axis of the linking portion 138 and the projection 16b of the second stopper 15b, the gap distance Csg1 will be greater than the gap distance Csg2.

As the movable assembly 135 moves downward in the state illustrated in Fig. 7, the first movable electrode 131 and the second movable electrode 132 also move downward. As a result, the length of the facing area over which the comb teeth 132a of the second movable electrode 132 and the comb teeth 142a of the second fixed electrodes 142 face opposite each other (will be referred to as a second facing area length Dcg2) and the length of a facing area over which the comb teeth 131a of the first movable electrode 131 and the comb teeth 141a of the first fixed electrodes 141 face opposite each other (will be referred to as a first facing area length Dcg1) become substantially equal to each other. Moreover, a gap distance Ccg1 between the front ends 151 of the comb teeth 131a of the first movable electrode 131 and the facing surfaces 161 of the first fixed electrodes 141 opposite which the front ends 151 of the comb teeth 131a of the first movable electrode 131 face becomes substantially equal to a gap distance Ccg2 between the front ends 152 of the comb teeth 132a of the second movable electrode 132 and the facing surfaces 162 of the second fixed electrodes 142 opposite which the front end 152 of the comb teeth 132a of the second movable electrode 132 face.

In the state illustrated in Fig. 7, the gap distance Csg1 between the one end 103a of the movable assembly 135 and the first stopper 15a and the gap distance Csg2 between the other end 103b of the movable assembly 135 and the second stopper 15b are both smaller than the gap distance Ccg2 between the front ends 152 of the comb teeth 132a of the second movable electrode 132 and the facing surfaces of the second fixed electrodes 142 opposite which the comb teeth 132a face. Likewise, the gap distance Csg1 and the gap distance Csg2 are both smaller than the gap distance Ccg1 between the front ends 151 of the comb teeth 131a of the first movable electrode 131 and the facing surfaces 161 of the first fixed electrodes 141 opposite which the comb teeth 131a face. This means that as the movable unit 103 vibrates, either the one end 103a of the movable unit 103 will come into contact with the projection 16a of the first stopper 15a or the other end 103b of the movable unit 103 will come into contact with the projection 16b of the second stopper 15b before the front ends 152 of the comb teeth 132a come into contact with the facing surfaces 162 of the second fixed electrodes 142 or the front ends 151 of the comb teeth 131a come into contact with the facing surfaces 161 of the first fixed electrodes 141.

Thus, when the movable assembly 135 installed at a vibration source vibrates, the one end 103a of the movable unit 103 will never come into contact with the projection 16a of the first stopper 15a before the other end 103b of the movable unit 103 comes into contact with the projection 16b of the second stopper 15b.

Consequently, the extent to which the power generation efficiency of the vibration-driven energy harvester 100 is lowered due to gravity acting on the movable assembly 135 when the first fixed electrodes 141 are positioned closer to the ground relative to the second fixed electrodes 142 at the vibration-driven energy harvester 100 set in a vertical orientation as shown in Fig. 7, can be minimized.

The following operational advantages are achieved through the third embodiment.
(1) The vibration-driven energy harvester 100 comprises a base 102, a movable assembly 135 that includes a first movable electrode 131 and a second movable electrode 132, first fixed electrodes 141 disposed so as to face opposite the first movable electrode 131, second fixed electrodes 142 disposed so as to face opposite the second movable electrode 132, elastic support members 133a and 133b having fixed ends 136a and 136b fixed to the base 102, which support the movable assembly 135, a first electret formed at least at either of the first movable electrode 131 and the first fixed electrodes 141, a second electret formed at least at either of the second movable electrode 132 and the second fixed electrodes 142, a first stopper 15a and a second stopper 15b disposed in order to regulate an amplitude of vibration of the movable assembly 135, located respectively so as to face opposite one end 103a of the movable assembly 135 located on a side where the first fixed electrodes 141 are present, and so as to face opposite another end 103b of the movable assembly 135 located on a side where the second fixed electrodes 142 are present. At the vibration-driven energy harvester 100 described above, a gap distance Cs2 between the other end 103b of the movable assembly 135 and the second stopper 15b and a gap distance Cs1 between the one end 103a of the movable assembly 135 and the first stopper 15a are different from each other. Thus, by positioning either side corresponding to the gap distance Cs1 or the gap distance Cs2, whichever takes the greater value, closer to the ground relative to the side corresponding to the smaller gap distance when installing the vibration-driven energy harvester at a vibration source, maximum extents to which the second movable electrode 132 and the first movable electrode 131 move can be substantially equalized. Since this effectively addresses the issue of lowered power generation efficiency, which would otherwise occur when the extent of movement of the first movable electrode is smaller than the extent of movement of the second movable electrode, better power generation efficiency can be achieved.
(2) When the vibration-driven energy harvester 100 is installed in a vertical orientation with the first movable electrode 131 positioned closer to the ground relative to the second movable electrode 132, a gap distance Csg1 between the one end 103a of the movable assembly 135 and the first stopper 15a is either substantially equal to or greater than a gap distance Csg2 between the other end 103b of the movable assembly 135 and the second stopper 15b. This makes it possible to substantially equalize maximum extents to which the second movable electrode 132 and the first movable electrode 131 move. Since this effectively addresses the issue of lowered power generation efficiency, which would otherwise occur when the extent of movement of the first movable electrode is smaller than the extent of movement of the second movable electrode, better power generation efficiency can be achieved.

### Fourth Embodiment

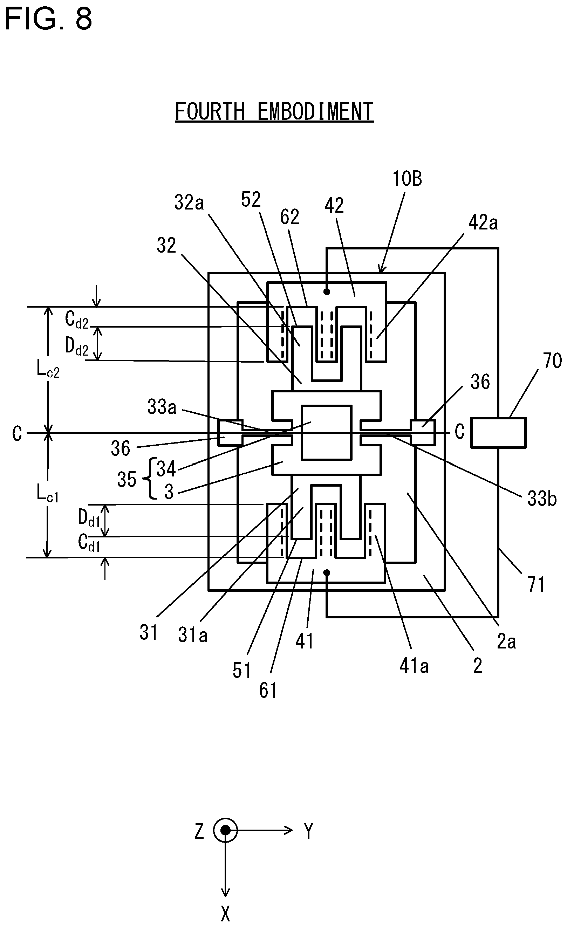

In reference to Figs. 8 through 10, the fourth embodiment will be described.

Fig. 8 is a plan view schematically illustrating the structure of the vibration-driven energy harvester achieved in the fourth embodiment of the present invention.

In the fourth embodiment, the level of electrostatic force acting between a second movable electrode 32 and a second fixed electrode 42 is set different from the level of electrostatic force acting between a first movable electrode 31 and a first fixed electrode 41.

The following explanation will focus on the features of the fourth embodiment distinguishable from those of the first embodiment without providing any repeated description of structural features similar to those of the first embodiment.

At a vibration-driven energy harvester 10B illustrated in Fig. 8, the charging voltage of the second electret formed at least at either one of the second movable electrode 32 and the second fixed electrode 42 is greater than the charging voltage of a first electret formed at least at either one of the first movable electrode 31 and the first fixed electrode 41.

As a result, it is possible to ensure that a movable assembly 35 does not descend toward the ground due to gravity even when the first fixed electrode 41 is positioned closer to the ground relative to the second fixed electrode 42.

The vibration-driven energy harvesters achieved in the first through third embodiments include the base 102, the movable assembly 135 vibratably supported at the base 102 by the elastic support members 133a and 133b, a first comb electrode structure, which includes the first movable electrode 131 connected to the movable assembly 135 and the first fixed electrode 141 fixed to the base 102 and a second comb electrode structure paired with the first comb electrode structure, which includes the second movable electrode 132 connected to the movable assembly 135 and the second fixed electrode 142 fixed to the base 102. The vibration-driven energy harvesters each assume an asymmetrical shape with the first comb electrode structure and the second comb electrode structure achieving asymmetry relative to a centerline passing through the center of the movable assembly 135. A vibration-driven energy harvester with such an asymmetrical shape is intended to improve the power generation efficiency when it is installed and operated in, for instance, a vertical orientation relative to the ground.

In contrast, the vibration-driven energy harvester achieved in the fourth embodiment assumes a symmetrical shape with the first comb electrode structure and the second comb electrode structure achieving symmetry relative to the centerline passing through the center of the movable assembly 35. However, the level of electrostatic force achieved via the electret between the second fixed electrode 42 and the second movable electrode 32 is set greater than the level of electrostatic force achieved via the electret between the first fixed electrode 41 and the first movable electrode 31 so as to ultimately achieve better power generation efficiency by preventing displacement of the movable assembly 35 toward the ground due to gravity even when the vibration-driven energy harvester is set in a vertical orientation relative to, for instance, the ground.

Fig. 8 shows the vibration-driven energy harvester 10B installed with the first fixed electrode 41 positioned closer to the ground relative to the second electrode 42. In other words, it shows the vibration-driven energy harvester 10B set in a vertical orientation relative to the ground. The first comb electrode structure and the second comb electrode structure achieve symmetry relative to the centerline passing through the center of the movable assembly 35 at the vibration-driven energy harvester 10B. In other words, it is designed so that a distance Lc1 setting apart fixed ends 36 of the elastic support members 33a and 33b from a facing surface 61 of the first fixed electrode 41 opposite which a front end 51 of the first movable electrode 31 faces, and a distance Lc2 setting apart the fixed ends 36 of the elastic support members 33a and 33b from a facing surface 62 of the second fixed electrode 42 opposite which a front end 52 of the second movable electrode 32 faces, are equal to each other. In addition, the comb teeth of the first fixed electrode 41 and the comb teeth of the first movable electrode 31 are designed so as to assume identical shapes for the comb teeth of the second fixed electrode 42 and the comb teeth of the second movable electrode 32. The first comb electrode structure and the second comb electrode structure have shapes symmetrical to each other.

It is to be noted that in the example presented in Fig. 8, the distance Lc1 is equal to or greater than the distance Lc2.

At the vibration-driven energy harvester 10B achieved in the fourth embodiment, the level of electrostatic force generated between the second movable electrode 32 and the second fixed electrode 42 in the second comb electrode structure is set greater than the level of electrostatic force generated between the first movable electrode 31 and the first fixed electrode 41 in the first comb electrode structure, so as to prevent the elastic support members 33a and 33b from flexing when the vibration-driven energy harvester 10B in operation vibrates along the vertical direction. The following is a detailed description.

At the vibration-driven energy harvester 10B achieved in the fourth embodiment, the distance Lc1 and the distance Lc2 are allowed to remain practically unchanged by adjusting the charging voltage achieved via the second electret and the charging voltage achieved via the first electret, regardless of whether the vibration-driven energy harvester 10B is installed in a horizontal orientation or it is installed in a vertical orientation, i.e., along the vertical direction, with the first fixed electrode 41 positioned closer to the ground relative to the second fixed electrode 42. This means that even when the vibration-driven energy harvester 10B is set in a vertical orientation, the movable assembly 35 is held at the same position as that assumed when the vibration-driven energy harvester is installed in a horizontal orientation and the movable assembly 35 thus hardly moves downward.

Through these measures, it can be ensured that a gap distance Cd1 between the front end 51 of the first movable electrode 31 and the facing surface 61 of the first fixed electrode 41 opposite which the front end 51 of the first movable electrode 31 faces hardly changes regardless of whether the vibration-driven energy harvester 10B is held in a horizontal orientation or it is held in a vertical orientation. Ideally, it is desirable that the gap distance does not change at all whether the vibration-driven energy harvester is installed in a horizontal orientation or in a vertical orientation. Likewise, a gap distance Cd2 between the front end 52 of the second movable electrode 32 and the facing surface 62 of the second fixed electrode 42 opposite which the front end 52 of the second movable electrode 32 faces hardly changes regardless of whether the vibration-driven energy harvester is held in a horizontal orientation or it is held in a vertical orientation.

Thus, it is possible to set the length of the facing area over which the comb teeth 31a of the first movable electrode 31 and the comb teeth 41a of the first fixed electrode 41 face opposite each other (will be referred to as a first facing area length Dd1) and the length of the facing area over which the comb teeth 32a of the second movable electrode 32 and the comb teeth 42a of the second fixed electrode 42 face opposite each other (will be referred to as a second facing area length Dd2) can be set substantially equal to each other regardless of whether the vibration-driven energy harvester is held in a vertical orientation or it is held in a horizontal orientation. Consequently, as long as the first facing area length Dd1 and the second facing area length Dd2 in the vibration-driven energy harvester installed in a horizontal orientation are set equal to each other, it is ensured that the first facing area length Dd1 and the second facing area length Dd2 in the vibration-driven energy harvester installed in a vertical orientation, too, are equal to each other.

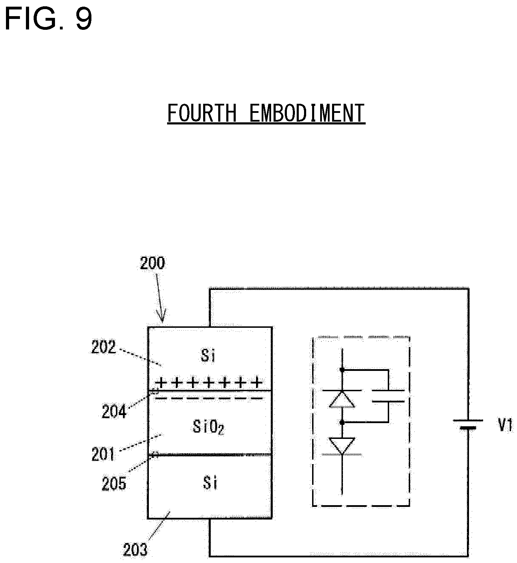

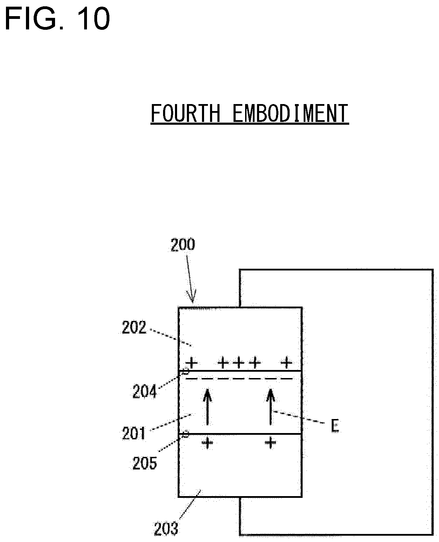

Fig. 9 is a schematic diagram illustrating a method for forming an electret for the vibration-driven energy harvester shown in Fig. 8, and Fig. 10 illustrates the vibration-driven energy harvester electret formation method in a schematic diagram in continuation to Fig. 9. A substrate (e.g., an SOI (silicon-on-insulator) substrate) 200 having a silicon oxide layer 201 held between silicon layers 202 and 203, is prepared. The substrate 200 is heated to achieve a high temperature (500 to 700°C) at which the silicon oxide layer 201 is rendered into a semiconductor state. As a voltage V1 is applied in this state, an electric double layer is formed at opposite sides of an Si/SiO2 interface 204 as shown in Fig. 9. While Si layers doped with impurities are used as the silicon layers, either p-type Si layers or n-type Si layers may be used for the silicon layers. In addition, the Si layers do not need to contain any impurities.

The Si/SiO2 interface 204 achieves a rectifying effect at high temperature. Thus, a positive charge is accumulated on the side where the silicon layer 202 is present relative to the upper Si/SiO2 interface 204, whereas a negative charge is accumulated on the side where the silicon oxide layer 201 is present relative to the upper Si/SiO2 interface 204. However, no electric double layer is formed near a lower Si/SiO2 interface 205 since the voltage is applied along a direction in which an electric current flows.

Next, the temperature of the substrate 200 is brought back to room temperature while continuously applying the voltage. Namely, the temperature of the substrate is lowered to a level at which the insulating property of the silicon oxide layer 201 is recovered. As a result, the negative charge having been accumulated on the side where the silicon oxide layer 201 is present relative to the Si/SiO2 interface 204 becomes trapped in the region, unable to migrate.

Subsequently, the application of the voltage V1 is stopped and the silicon layer 202 and the silicon layer 203 are connected with each other as illustrated in Fig. 10. As a result, part of the positive charge is allowed to migrate from the silicon layer 202 to the silicon layer 203.

At the same time, the negative charge in the silicon oxide layer 201, which has an insulating property, remains trapped near the Si/SiO2 interface 204 even after application of the voltage V1 stops. Consequently, an electric field E is formed within the silicon oxide layer 201 as shown in Fig. 10. This electric field E is a field generated via an electret and the potential difference between the Si/SiO2 interface 204 and the Si/SiO2 interface 205 is V1. Namely, an electret achieving a voltage V1 is formed.

Through adjustment of the voltage V1 applied to the substrate 200 being heated, substrates 200 achieving varying potential differences between the Si/SiO2 interface 204 and the Si/SiO2 interface 205 can be formed.

It is to be noted that in the structural example achieved in the fourth embodiment as described above, the charging voltage achieved via the second electret and the charging voltage achieved via the first electret are adjusted so that the distance Lc1 remains substantially unchanged regardless of whether the vibration-driven energy harvester 10B is installed in a horizontal orientation or in a vertical orientation. However, the present invention is not limited to this example and it may be adopted in conjunction with a structure in which the charging voltage achieved via the second electret and the charging voltage achieved via the first electret are adjusted so that the distance Lc1 at the vibration-driven energy harvester 10B installed in a vertical orientation is smaller than the distance Lc1 at the vibration-driven energy harvester 10B installed in a horizontal orientation. In other words, the present invention may be adopted in conjunction with either structure as long as the charging voltage achieved via the second electret and the charging voltage achieved via the first electret are adjusted so that the descending movement of the movable assembly 35 toward the ground is deterred at the vibration-driven energy harvester 10B installed in a vertical orientation.

Since other structural features of the fourth embodiment are similar to those of the first embodiment, the same reference signs are assigned to the corresponding structural elements and a repeated explanation thereof will not be provided.

The following operational advantages are achieved through the fourth embodiment.
(1) The vibration-driven energy harvester 10B comprises a movable assembly 35 that includes a first movable electrode 31 and a second movable electrode 32, a first fixed electrode 41 disposed so as to face opposite the first movable electrode 31, a second fixed electrode 42 disposed so as to face opposite the second movable electrode 32, elastic support members 33a and 33b that support the movable assembly 35, a first electret formed at least at either one of the first movable electrode 31 and the first fixed electrode 41, and a second electret formed at least at either one of the second movable electrode 32 and the second fixed electrode 42. The level of electrostatic force acting between the second movable electrode 32 and the second fixed electrode 42 is different from the level of electrostatic force acting between the first movable electrode 31 and the first fixed electrode 41 at the vibration-driven energy harvester 10B. Thus, by positioning the comb electrode structure with the lower electrostatic force closer to the ground compared to the comb electrode structure with the greater electrostatic force when installing the vibration-driven energy harvester at a vibration source, the movable assembly 35 is allowed to vibrate with a greater amplitude. Through these measures, the extent to which the power generation efficiency of the vibration-driven energy harvester 10B is lowered due to gravity acting on the movable assembly 35 can be minimized.
(2) When the first movable electrode 31 is positioned closer to the ground compared to the second movable electrode 32 at the vibration-driven energy harvester 10B described above, the electrostatic force acting between the second movable electrode 32 and the second fixed electrode 42 is greater than the electrostatic force acting between the first movable electrode 31 and the first fixed electrode 41. This means that when the vibration-driven energy harvester 10B is installed with the first fixed electrode 41 positioned closer to the ground relative to the second fixed electrode 42, descending movement of the movable assembly 35 toward the ground attributable to gravity can be deterred. As a result, the extent to which the power generation efficiency of the vibration-driven energy harvester 10B is lowered due to gravity acting on the movable assembly 35 can be minimized.

### Fifth Embodiment

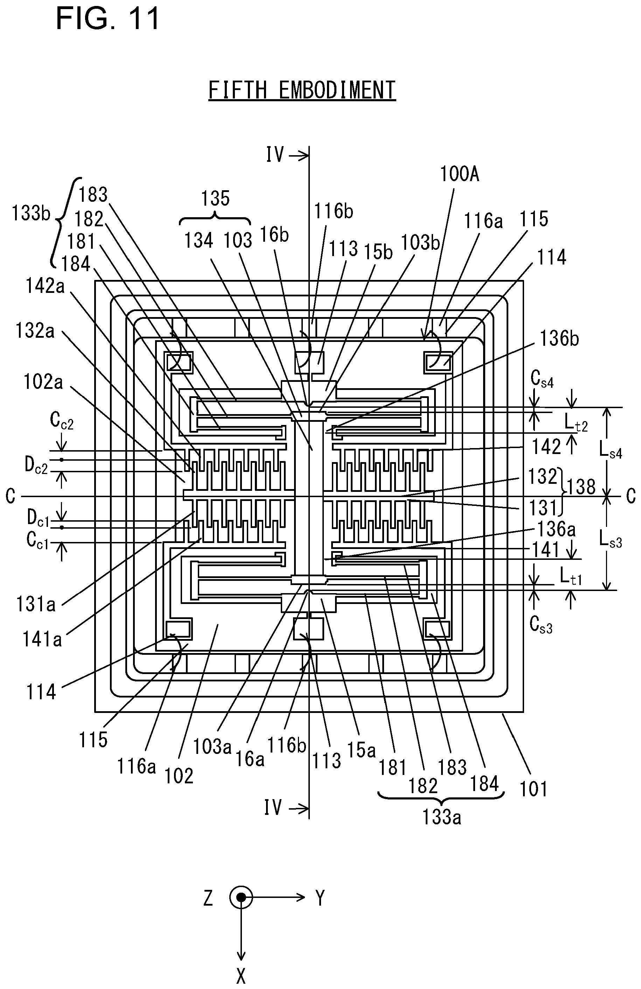

Fig. 11 is a plan view of the vibration-driven energy harvester achieved in the fifth embodiment of the present invention.

As in the fourth embodiment, the level of electrostatic force acting between the second movable electrode 32 and the second fixed electrode 42 and the level of electrostatic force acting between the first movable electrode 31 and the first fixed electrode 41 are set different from each other in the fifth embodiment. In the fifth embodiment, this structural feature is adopted in the vibration-driven energy harvester 100 in the third embodiment, which includes the first and second stoppers 15a and 15b used to regulate the amplitude of vibration of the movable unit 103.

The following explanation will focus on the features of the fifth embodiment distinguishable from those of the third embodiment, without providing any repeated description of structural features similar to those of the third embodiment.

At a vibration-driven energy harvester 100A in Fig. 11, the charging voltage achieved via a second electret formed at least at either of a second movable electrode 132 and second fixed electrodes 142 is set greater than the charging voltage achieved via a first electret formed at least at either of a first movable electrode 131 and first fixed electrodes 141.

As a result, even when the vibration-driven energy harvester 100A is installed in, for instance, a vertical orientation with the first fixed electrodes 141 positioned closer to the ground relative to the second fixed electrodes 142, descending movement of a movable assembly 135 toward the ground attributable to gravity can be deterred.

Fig. 11 shows the vibration-driven energy harvester 100A held in a vertical orientation with the first fixed electrodes 141 positioned closer to the ground compared to the second fixed electrodes 142. At the vibration-driven energy harvester assuming a vertical attitude, a distance Ls3 setting apart a center C-C, taken along the X axis, of a linking portion 138 functioning as a common electrode shared by the first movable electrode 131 and the second movable electrode 132 from a projection 16a of a first stopper 15a is substantially equal to a distance Ls4 between the center C-C, taken along the X axis, of the linking portion 138 and a projection 16b of a second stopper 15b. In addition, at the vibration-driven energy harvester assuming a vertical attitude, a gap distance Cs3 between one end 103a of the movable unit 103 and the projection 16a of the first stopper 15a is either substantially equal to or greater than a gap distance Cs4 between another end 103b of the movable unit 103 and the projection 16b of the second stopper 15b.

Through adjustment of the charging voltage achieved via the second electret and the charging voltage achieved via the first electret, it can be ensured that the distance Ls3 and the distance Ls4 hardly change regardless of whether the vibration-driven energy harvester 100A is held in a horizontal orientation or it is held in a vertical orientation with the first fixed electrodes 141 positioned closer to the ground relative to the second fixed electrodes 142. In other words, it can be ensured that the center C-C, taken along the X axis, of the linking portion 138 at the movable unit 103 sustains a substantially constant position along the X axis, regardless of whether the vibration-driven energy harvester 100A is set in a horizontal orientation or in a vertical orientation.

Through the measures described above, it is ensured that the gap distance Cs3 and the gap distance Cs4 both remain substantially unchanged regardless of whether the vibration-driven energy harvester 100A is held in a horizontal orientation or in a vertical orientation.

Consequently, a substantially constant amplitude is achieved with respect to vibration of the movable unit 103, regardless of whether the vibration-driven energy harvester 100A is operated in a horizontal orientation or in a vertical orientation, and ultimately, the extent to which the power generation efficiency of the vibration-driven energy harvester 100A is lowered when it is operated in a vertical orientation can be minimized.

Since other structural features of the fifth embodiment are similar to those of the third embodiment, the same reference signs are assigned to the corresponding structural elements and a repeated explanation thereof will not be provided.

Accordingly, the vibrations driven energy harvester 100A in the fifth embodiment achieves operational advantages similar to those described in (1) and (2) with respect to the vibration-driven energy harvester 10B in the fourth embodiment.

It is to be noted that the vibration-driven energy harvesters in the fourth and fifth embodiments each achieve different levels of the electrostatic force acting between the second movable electrode 32/132 and the second fixed electrode(s) 42/142 and of the electrostatic force acting between the first movable electrode 31/131 and the first fixed electrode(s) 41/141 by ensuring that the charging voltage achieved via the second electret between the second movable electrode 32/132 and the second fixed electrode(s) 42/142 and the charging voltage achieved via the first electret between the first movable electrode 31/131 and the first fixed electrode(s) 41/141 are different from each other. However, different levels of electrostatic force can be achieved with respect to the electrostatic force acting between the second movable electrode 32/132 and the second fixed electrode(s) 42/142 and the electrostatic force acting between the first movable electrode 31/131 and the first fixed electrode(s) 41/141 by adopting alternative structural features. The following is a description of vibration-driven energy harvesters adopting such alternative features.

### Sixth Embodiment

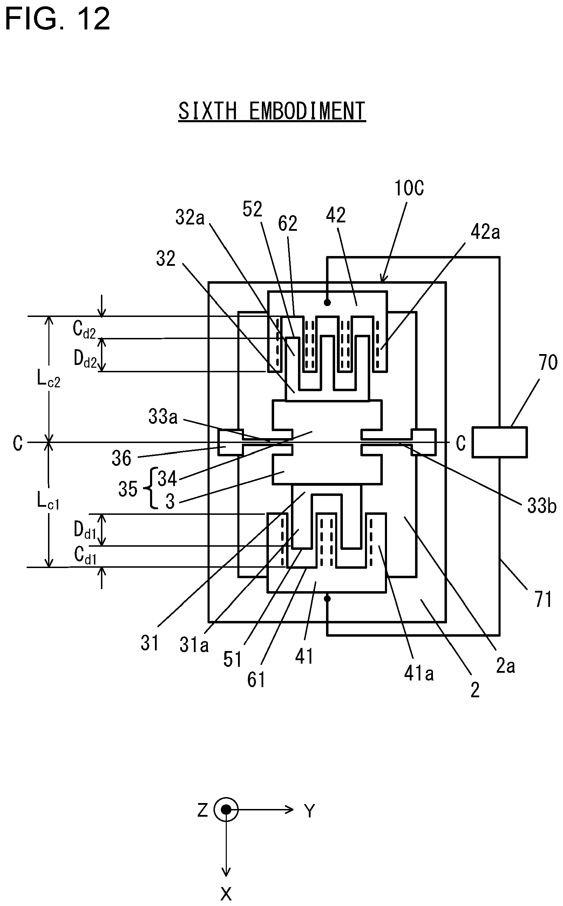

Fig. 12 is a plan view schematically illustrating the structure of the vibration-driven energy harvester achieved in the sixth embodiment of the present invention.

In the sixth embodiment, comb teeth 42a and comb teeth 32a are formed at a second fixed electrode 42 and a second movable electrode 32 in quantities respectively different from the quantity of comb teeth 41a formed at a first fixed electrode 41 and the quantity of comb teeth 31a formed at a first movable electrode 31.

The following explanation will focus on the features of the sixth embodiment distinguishable from those of the fourth embodiment without providing any repeated description of structural features similar to those of the fourth embodiment.

At a vibration-driven energy harvester 10C shown in Fig. 12, four comb teeth 42a are formed at the second fixed electrode 42 and three comb teeth 32a are formed at the second movable electrode 32. In addition, three comb teeth 41a are formed at the first fixed electrode 41 and two comb teeth 31a are formed at the first movable electrode 31.

Namely, the comb teeth 42a and the comb teeth 32a are formed at the second fixed electrode 42 and the second movable electrode 32 in quantities respectively greater than the quantities of the comb teeth 41a and the comb teeth 31a formed at the first fixed electrode 41 and the first movable electrode 31. Accordingly, the total area (the grand total of areas) over which the comb teeth 42a of the second fixed electrode 42 face opposite the comb teeth 32a of the second movable electrode 32 is greater than the total area (the grand total of areas) over which the comb teeth 41a of the first fixed electrode 41 face opposite the comb teeth 31a of the first movable electrode 31.

This means that provided that the charging voltage per unit area achieved via the second electret formed in correspondence to the second fixed electrode 42 and the second movable electrode 32 and the charging voltage per unit area achieved via the first electret formed in correspondence to the first fixed electrode 41 and the first movable electrode 31 are equal to each other, a greater level of electrostatic force acts between the second fixed electrode 42 and the second movable electrode 32 in comparison to the level of electrostatic force acting between the first fixed electrode 41 and the first movable electrode 31.

It is to be noted that an explanation is given above in reference to an example in which the charging voltage per unit area achieved via the second electret and the charging voltage per unit area achieved via the first electret are equal. However, the charging voltage per unit area achieved via the second electret may be greater than the charging voltage per unit area achieved via the first electret. In addition, as long as the requirement whereby the electrostatic force acting between the second fixed electrode 42 and the second movable electrode 32 is greater than the electrostatic force acting between the first fixed electrode 41 and the first movable electrode 31 is satisfied, the charging voltage per unit area achieved via the second electric may be lower than the charging voltage per unit area achieved via the first electret.

Since other structural features of the sixth embodiment are similar to those of the fourth embodiment, the same reference signs are assigned to the corresponding structural elements and a repeated explanation thereof will not be provided.

As a result, operational advantages similar to those of the fourth embodiment are achieved through the sixth embodiment.

It is to be noted that the structure achieved in the sixth embodiment, in which the quantity of the comb teeth 42a of the second fixed electrode 42 and the quantity of the comb teeth 32a of the second movable electrode 32 are respectively greater than the quantity of the comb teeth 41a of the first fixed electrode 41 and the quantity of the comb teeth 31a of the first movable electrode 31, may be adopted in the vibration-driven energy harvester in the fifth embodiment having the first and second stoppers 15a and 15b, used to regulate the amplitude of vibration of the movable unit 103.

### Seventh Embodiment

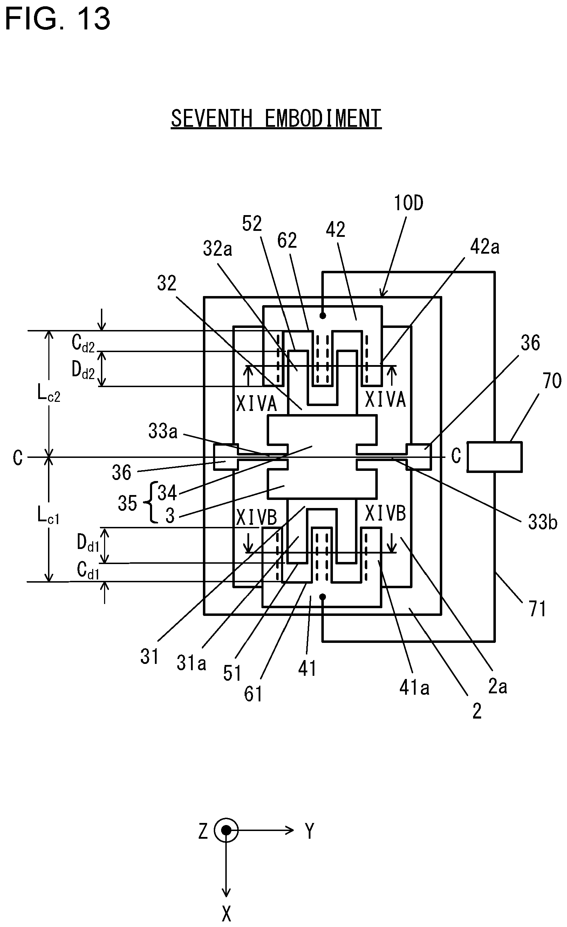

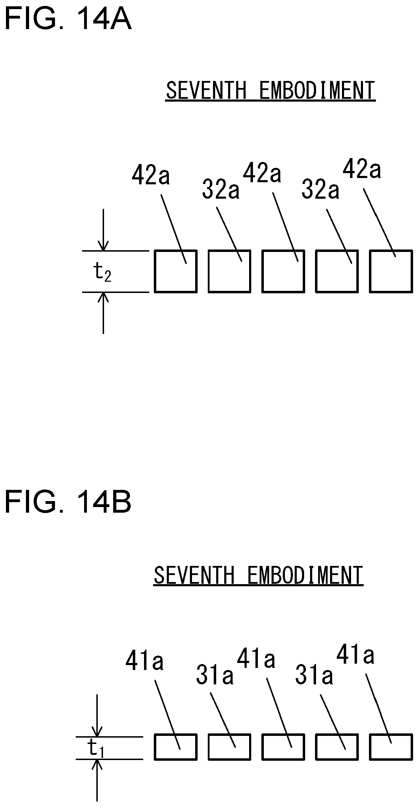

In reference to Fig. 13 and Figs. 14A and 14B, the seventh embodiment of the present invention will be explained.

Fig. 13 is a plan view schematically illustrating the structure of the vibration-driven energy harvester achieved in the seventh embodiment of the present invention.

In the seventh embodiment, the thickness of comb teeth 42a formed at a second fixed electrode 42 and the thickness of comb teeth 32a formed at a second movable electrode 32 are set different respectively from the thickness of comb teeth 41a formed at a first fixed electrode 41 and the thickness of comb teeth 31a formed at a first movable electrode 31.

The following explanation will focus on the features of the seventh embodiment distinguishable from those of the fourth embodiment without providing any repeated description of structural features similar to those of the fourth embodiment.

A vibration-driven energy harvester 10D shown in Fig. 13 adopts a structure in which the thicknesses (measured along the Z direction) of the comb teeth 42a and the comb teeth 32a at the second fixed electrode 42 and the second movable electrode 32 are set greater respectively than the thicknesses (measured along the Z direction) of the comb teeth 41a and the comb teeth 31a at the first fixed electrode 41 and the first movable electrode 31.

At the vibration-driven energy harvester 10D, the comb teeth 42a and the comb teeth 32a are formed at the second fixed electrode 42 and the second movable electrode 32 in quantities respectively matching the quantity of the comb teeth 41a of the first fixed electrode 41 and the quantity of the comb teeth 31a of the first movable electrode 31.

Fig. 14A is a sectional view taken through line XIVA - XIVA in Fig. 13 whereas Fig. 14B is a sectional view taken through line XIVB - XIVB in Fig. 13.

As Fig. 14A indicates, the comb teeth 42a at the second fixed electrode 42 and the comb teeth 32a at the second movable electrode 32 assume a matching thickness t2. As Fig. 14B indicates, the comb teeth 41a at the first fixed electrode 41 and the comb teeth 31a at the first movable electrode 31 assume a matching thickness t1. The thickness t2 of the comb teeth 42a and the comb teeth 32a is greater (thicker) than the thickness t1 of the comb teeth 41a and the comb teeth 31a. Accordingly, the total area (the grand total of areas) over which the comb teeth 42a of the second fixed electrode 42 face opposite the comb teeth 32a of the second movable electrode 32 is greater than the total area (the grand total of areas) over which the comb teeth 41a of the first fixed electrode 41 face opposite the comb teeth 31a of the first movable electrode 31.

This means that provided that the charging voltage per unit area achieved via the second electret formed in correspondence to the second fixed electrode 42 and the second movable electrode 32 and the charging voltage per unit area achieved via the first electret formed in correspondence to the first fixed electrode 41 and the first movable electrode 31 are equal to each other, a greater level of electrostatic force acts between the second fixed electrode 42 and the second movable electrode 32 in comparison to the level of electrostatic force acting between the first fixed electrode 41 and the first movable electrode 31.

It is to be noted that an explanation is given above in reference to an example in which the charging voltage per unit area achieved via the second electret and the charging voltage per unit area achieved via the first electret are equal. However, the charging voltage per unit area achieved via the second electret may be greater than the charging voltage per unit area achieved via the first electret. In addition, as long as the requirement whereby the electrostatic force acting between the second fixed electrode 42 and the second movable electrode 32 is at a level greater than the level of the electrostatic force acting between the first fixed electrode 41 and the first movable electrode 31 is satisfied, the charging voltage per unit area achieved via the second electric may be lower than the charging voltage per unit area achieved via the first electret.

Since other structural features of the seventh embodiment are similar to those of the fourth embodiment, the same reference signs are assigned to the corresponding structural elements and a repeated explanation thereof will not be provided.

As a result, operational advantages similar to those of the fourth embodiment are achieved through the seventh embodiment.

It is to be noted that the structure achieved in the seventh embodiment, in which the thickness t2 of the comb teeth 42a of the second fixed electrode 42 and of the comb teeth 32a of the second movable electrode 32 is greater than the thickness t1 of the comb teeth 31a and 41a of the first fixed electrode 41 and the first movable electrode 31 may be adopted in the vibration-driven energy harvester in the fifth embodiment which includes the first and second stoppers 15a and 15b used to regulate the amplitude of vibration of the movable unit 103.

### Eighth Embodiment

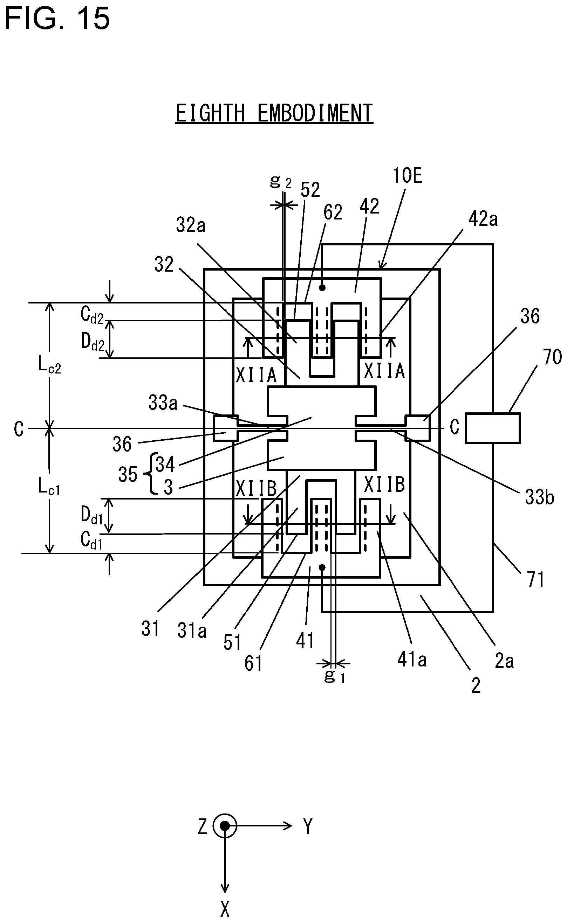

Fig. 15 is a plan view schematically illustrating the structure of the vibration-driven energy harvester achieved in the eighth embodiment of the present invention.

In the eighth embodiment, a gap g2 between comb teeth 42a of a second fixed electrode 42 and comb teeth 32a of a second movable electrode 32 is set different from a gap g1 between comb teeth 41a of a first fixed electrode 41 and comb teeth 31a of a first movable electrode 31.

The following explanation will focus on the features of the eighth embodiment distinguishable from those of the fourth embodiment without providing any repeated description of structural features similar to those of the fourth embodiment.

At a vibration-driven energy harvester 10E shown in Fig. 15, the gap g2 between the comb teeth 42a of the second fixed electrode 42 and the comb teeth 32a of the second movable electrode 32 is set smaller than the gap g 1 between the comb teeth 41a of the first fixed electrode 41 and the comb teeth 31a of the first movable electrode 31.

At the vibration-driven energy harvester 10E, the quantity of the comb teeth 42a of the second fixed electrode 42 and the quantity of the comb teeth 32a of the second movable electrode 32 are respectively equal to the quantity of the comb teeth 41a of the first fixed electrode 41 and the quantity of the comb teeth 31a of the first movable electrode 31. In addition, the thicknesses (measured along the Z direction) of the comb teeth 42a formed at the second fixed electrode 42 and the comb teeth 32a formed at the second movable electrode 32 respectively match the thicknesses (measured along the Z direction) of the comb teeth 41a formed at the first fixed electrode 41 and the comb teeth 31a formed at the first movable electrode 31.

The level of attractive force acting between a pair of comb teeth due to opposite electric charges is greater when a gap g between the comb teeth is smaller. Accordingly, provided that the charging voltage per unit area achieved via the second electret formed in correspondence to the second fixed electrode 42 and the second movable electrode 32 and the charging voltage per unit area achieved via the first electret formed in correspondence to the first fixed electrode 41 and the first movable electrode 31 are equal to each other, the level of electrostatic force acting between the second fixed electrode 42 and the second movable electrode 32 is greater than the level of electrostatic force acting between the first fixed electrode 41 and the first movable electrode 31.

Since other structural features of the eighth embodiment are similar to those of the fourth embodiment, the same reference signs are assigned to the corresponding structural elements and a repeated explanation thereof will not be provided.

Consequently, operational advantages similar to those described in the fourth embodiment are achieved through the eighth embodiment.

It is to be noted that the structure achieved in the eighth embodiment in which the gap g2 between the comb teeth 42a of the second fixed electrode 42 and the comb teeth 32a of the second movable electrode 32 is smaller than the gap g1 between the comb teeth 41a of the first fixed electrode 41 and the comb teeth 31a of the first movable electrode 31 may be adopted in the vibration-driven energy harvester 100A in the fifth embodiment which includes the first and second stoppers 15a and 15b used to regulate the amplitude of vibration of the movable unit 103.

The structures achieved in the fourth and sixth through eighth embodiments may be adopted in combination as deemed appropriate.

Namely, a vibration-driven energy harvester achieving different levels for the electrostatic force acting between the first fixed electrode 41 and the first movable electrode 31 and for the electrostatic force acting between the second fixed electrode 42 and the second movable electrode 32, may be configured by combining at least two structural features, among the structural feature in which the charging voltage achieved via the second electret between the second fixed electrode 42 and the second movable electrode 32 and the charging voltage achieved via the first electret between the first fixed electrode 41 and the first movable electrode 31 are different from each other, the structural feature in which the quantities of the comb teeth 42a and 32a of the second fixed electrode 42 and the second movable electrode 32 are respectively different from the quantities of the comb teeth disposed at the first fixed electrode and the first movable electrode, the structural feature in which the thicknesses of the comb teeth 42a and 32a of the second fixed electrode 42 and the second movable electrode 32 are different from the thicknesses of the comb teeth disposed at the first fixed electrode and the first movable electrode and the structural feature in which the gap between the comb teeth 42a and the comb teeth 32a is different from the gap between the comb teeth 41a and the comb teeth 31a.

In addition, the structural feature in which the level of electrostatic force acting between the first fixed electrode 41 and the first movable electrode 31 is different from the level of electrostatic force acting between the second fixed electrode 42 and the second movable electrode 32 may be adopted in combination with a structural feature achieved in the first embodiment, in which the gap distance Ca2 between the front end 52 of the second movable electrode 32 and the facing surface 62 of the second fixed electrode 42 and the gap distance Ca1 between the front end 51 of the first movable electrode 31 and the facing surface 61 of the first fixed electrode 41 are different from each other. As a further alternative, the structural feature in which the level of electrostatic force acting between the first fixed electrode 41 and the first movable electrode 31 is different from the level of electrostatic force acting between the second fixed electrode 42 and the second movable electrode 32 may be adopted in combination with a structural feature achieved in the second embodiment, in which the first facing area length Db1 of the area over which the comb teeth 31a of the first movable electrode 31 face opposite the comb teeth 41a of the first fixed electrode 41 is different from the second facing area length Db2 of the area over which the comb teeth 32a of the second movable electrode 32 face opposite the comb teeth 42a of the second fixed electrode 42.

Likewise, the third embodiment may also be adopted in combination with the structural features achieved in any of the fourth and sixth through eighth embodiments.

Namely, a structural feature achieved through any of the fourth and sixth through eighth embodiments, in which the level of electrostatic force acting between the first fixed electrode 41 and the first movable electrode 31 is different from the level of electrostatic force acting between the second fixed electrode 42 and the second movable electrode 32, may be adopted in combination with the structural feature achieved in the third embodiment, in which the gap distance Cs4 between the other end 103b of the movable assembly 135 and the second stopper 15b is set different from the gap distance Cs3 between the one end 103a of the movable assembly 35 and the first stopper 15a.

While the vibration-driven energy harvesters 10, 10A through 10E, 100 and 100A achieved in the embodiments are each configured by using an SOI substrate in the description provided above, the vibration-driven energy harvester according to the present invention may be configured by using a silicon substrate instead of an SOI substrate. Furthermore, it may be configured by using a substrate constituted of glass, metal, alumina or the like as an alternative to a silicon substrate.

In the embodiments described above, the first and second movable electrodes 31, 32, 131 and 132 and the first and second fixed electrodes 41, 42, 141 and 142 are comb electrodes. However, the present invention may be adopted in conjunction with an electrode other than a comb electrode.

While an explanation has been given on various embodiments of the present invention and variations thereof, the present invention is not limited to the particulars of these examples. The scope of protection is defined by the claims.

### REFERENCE SIGNS LIST

2 base
3 movable unit
10, 10A to 10E vibration-driven energy harvester
15a first stopper
15b second stopper
31 first movable comb electrode (first movable electrode)
31a comb tooth
32 second movable comb electrode (second movable electrode)
32a comb tooth
33a, 33b elastic support member
34 weight
35 movable assembly
36 fixed end
41 first fixed electrode
41a comb tooth
42 second fixed electrode
42a comb tooth
51, 52 front end
61, 62 facing surface
100, 100A vibration-driven energy harvester
102 base
103 movable unit
103a one end
103b another end
131 first movable electrode
131a comb tooth
132 second movable electrode
132a comb tooth
133a, 133b elastic support member
134 weight
135 movable assembly
136a, 136b fixed end
138 linking portion
141 first fixed electrode
141a comb tooth
142 second fixed electrode
142a comb tooth
151, 152 front end
161, 162 facing surface
Ca1, Ca2, Cag1, Cag2, Cb1 Cb2, Cbg1, Cbg2, Cc1, Cc2, Ccg1, Ccg2, Cd1, Cd2, Cs1 to Cs4, Csg1, Csg2 gap distance
Da1, Dag1, Db1, Dbg1, Dc1, Dcg1, Dd1 first facing area length
Da2, Dag2, Db2, Dbg2, Dc2, Dcg2, Dd2 second facing area length
La1, La2, Lb1, Lb2, Lel, Lc2, Ls1 to Ls4, Lsg1, Lsg2, Lt1, Lt2 distance
t1, t2 thickness
g1, g2 gap

## Claims

1. A vibration-driven energy harvester, comprising:
a base (2);
a movable assembly (35) that includes a first movable electrode (31) and a second movable electrode (32);
a first fixed electrode (41) disposed so as to face opposite the first movable electrode (31);
a second fixed electrode (42) disposed so as to face opposite the second movable electrode;
an elastic support member (33a, b) having a fixed end (36) fixed to the base (2), the elastic support member (33a,b) supporting the movable assembly (35);
a first electret formed at least at one of the first movable electrode (31) and the first fixed electrode (41); and
a second electret formed at least at one of the second movable electrode (32) and the second fixed electrode (42), **characterized in that**:
when the vibration-driven energy harvester is not vibrating and the vibration-driven energy harvester has a horizontal orientation wherein the first fixed electrode (41) and the second fixed electrode (42) are at a same height in the direction of gravity, a first gap distance (Ca1) between a front end (51) of the first movable electrode (31) and a facing surface (61) of the first fixed electrode (41) facing the front end (51) of the first movable electrode (31) is different from a second gap distance (Ca2) between a front end (52) of the second movable electrode (32) and a facing surface (62) of the second fixed electrode (42) facing the front end (52) of the second movable electrode (32).

2. The vibration-driven energy harvester according to claim 1, wherein:
when the vibration-driven energy harvester has an orientation wherein the first movable electrode (31) is positioned lower in the direction of gravity than the second movable electrode (32), the first gap distance is equal to or greater than the second gap distance..

3. The vibration-driven energy harvester according to claim 1 or claim 2, wherein:
a distance between the fixed end (36) of the elastic support member (33a,b) and the facing surface of the first fixed electrode (41) facing the front end (31) of the first movable electrode (51) is greater than a distance between the fixed end (36) of the elastic support member (33a,b) and the facing surface of the second fixed electrode (42) facing the front end (52) of the second movable electrode (32).

4. The vibration-driven energy harvester according to any one of claims 1 through 3, wherein:
the first fixed electrode (41) and the second fixed electrode (42) each include a plurality of comb teeth (41a, 42a); and
the comb teeth (41a) of the first fixed electrode (41) have a length greater than a length of the comb teeth (42a) of the second fixed electrode (42).

5. The vibration-driven energy harvester according to any one of claims 1 through 3, wherein:
the first movable electrode (31) and the second movable electrode (32) each include a plurality of comb teeth (31a, 32a); and
the comb teeth (31a) of the first movable electrode (31) have a length greater than a length of the comb teeth (32a) of the second movable electrode (32).

6. A vibration-driven energy harvester, comprising:
a base (2);
a movable assembly (35) that includes a first movable electrode (31) having a plurality of comb teeth and a second movable electrode (32) having a plurality of comb teeth;
a first fixed electrode (41) disposed so as to face opposite the first movable electrode (31) and having a plurality of comb teeth (41a);
a second fixed electrode (42) disposed so as to face opposite the second movable electrode (32) and having a plurality of comb teeth (42a);
an elastic support member (33a,b) having a fixed end (36) fixed to the base (2), the elastic support member (33a,b) supporting the movable assembly (35);
a first electret formed at least at one of the first movable electrode (31) and the first fixed electrode (41); and
a second electret formed at least at one of the second movable electrode (32) and the second fixed electrode (42), **characterized in that**:
when the vibration-driven energy harvester is not vibrating and the vibration-driven energy harvester has a horizontal orientation wherein the first fixed electrode (41) and the second fixed electrode (42) are at a same height in the direction of gravity, a first facing area length of a facing area over which the comb teeth (32a) of the first movable electrode (32) face opposite the comb teeth (41a) of the first fixed electrode (41) is different from a second facing area length of a facing area over which the comb teeth (32a) of the second movable electrode (32) and the comb teeth (42a) of the second fixed electrode (42) face opposite each other.

7. The vibration-driven energy harvester according to claim 6, wherein:
a first gap distance between a front end (51) of the first movable electrode (31) and a facing surface (61) of the first fixed electrode (41) facing the front end of the first movable electrode (31) is equal to or greater than a second gap distance between a front end (52) of the second movable electrode (32) and a facing surface (62) of the second fixed electrode (42) facing the front end (52) of the second movable electrode (32).

8. The vibration-driven energy harvester according to claim 6, wherein:
the first facing area length is smaller than the second facing area length when the vibration-driven energy harvester is has an orientation wherein the first movable electrode (31) positioned lower in the direction of gravity than the second movable electrode (32).

9. The vibration-driven energy harvester according to claim 6, wherein:
a distance between the fixed end (36) of the elastic support member (33a,b) and a facing surface (61) of the first fixed electrode (41) facing a front end (51) of the first movable electrode (31) is smaller than a distance between the fixed end (36) of the elastic support member (33a,b) and a facing surface (62) of the second fixed electrode (42) facing a front end (52) of the second movable electrode (32).

10. The vibration-driven energy harvester according to any one of claims 6 through 9, wherein:
the comb teeth (41a) of the first fixed electrode (41) have a length smaller than a length of the comb teeth (42a) of the second fixed electrode (42).

11. A vibration-driven energy harvester (100), comprising:
a base (102);
a movable assembly (135) that includes a first movable electrode (131) and a second movable electrode (132);
a first fixed electrode (141) disposed so as to face opposite the first movable electrode (131);
a second fixed electrode (142) disposed so as to face opposite the second movable electrode (132);
an elastic support member (133a, b) having a fixed end (136) fixed to the base (2), the elastic support member (133,a,b) supporting the movable assembly (135);
a first electret formed at least at one of the first movable electrode (131) and the first fixed electrode (141);
a second electret formed at least at one of the second movable electrode (132) and the second fixed electrode (142); **characterized by**
a first stopper (15a) and a second stopper (15b) to regulate an amplitude of vibration of the movable assembly (135) respectively disposed so as to face opposite one end of the movable assembly (135) located on a side where the first fixed electrode (141) is present and so as to face opposite another end of the movable assembly (135) located on a side where the second fixed electrode (132) is present, wherein:
when the vibration-driven energy harvester (100) is not vibrating and the vibration-driven energy harvester (100) has a horizontal orientation wherein the first fixed electrode (141) and the second fixed electrode (142) are at a same height in the direction of gravity, a gap distance between the other end of the movable assembly (135) and the second stopper (15b) is different from a gap distance between the one end of the movable assembly (135) and the first stopper (15a).

12. The vibration-driven energy harvester (100) according to claim 11, wherein:
the gap distance between the one end of the movable assembly (135) and the first stopper (15a) is greater than the gap distance between the other end of the movable assembly (135) and the second stopper (15b); and
when the vibration-driven energy harvester has an orientation wherein the vibration-driven energy harvester is in an orientation wherein the first movable electrode (131) is positioned lower in the direction of gravity than the second movable electrode (132), the gap distance between the one end of the movable assembly (135) and the first stopper (15a) is substantially equal to or greater than the gap distance between the other end of the movable assembly (135) and the second stopper (15b).

13. A vibration-driven energy harvester, comprising:
a base (2)
a movable assembly (35) that includes a first movable electrode (31) and a second movable electrode (32);
a first fixed electrode (41) disposed so as to face opposite the first movable electrode (31);
a second fixed electrode (42) disposed so as to face opposite the second movable electrode (32);
an elastic support member (33a,b) having a fixed end (36) fixed to the base (2), the elastic support member (33a,b) supporting the movable assembly (35);
a first electret formed at least at one of the first movable electrode (31) and the first fixed electrode (41); and
a second electret formed at least at one of the second movable electrode (32) and the second fixed electrode (42), **characterized in that**:
when the vibration-driven energy harvester is not vibrating and the vibration-driven energy harvester has a horizontal orientation wherein the first fixed electrode (41) and the second fixed electrode (42) are at a same height in the direction of gravity, an electrostatic force acting between the second movable electrode (32) and the second fixed electrode (42) is different from electrostatic force acting between the first movable electrode (31) and the first fixed electrode (41).

14. The vibration-driven energy harvester according to claim 13, wherein:
when the vibration-driven energy harvester has an orientation wherein the first movable electrode (31) is positioned lower in the direction of gravity than the second movable electrode (31), the electrostatic force acting between the second movable electrode (32) and the second fixed electrode (42) is greater than the electrostatic force acting between the first movable electrode (31) and the first fixed electrode (41).

15. The vibration-driven energy harvester according to claim 14, wherein:
a charging voltage at the second electret is greater than a charging voltage at the first electret.

16. The vibration-driven energy harvester according to claim 14 or claim 15, wherein:
the first fixed electrode (41) and the second fixed electrode (42) each include a plurality of comb teeth (41a, 42a); and
the first movable electrode (31) includes a plurality of comb teeth (31a) and the second movable electrode (32) includes a plurality of comb teeth (32a), respectively to be interdigitated with the first fixed electrode (41) and the second fixed electrode (42).

17. The vibration-driven energy harvester according to claim 16, wherein:
the comb teeth (32a) at the second movable electrode (32) are greater in quantity in comparison to the comb teeth (31a) at the first movable electrode (31); and
the comb teeth (42a) at the second fixed electrode (42) are greater in quantity than the comb teeth (41a) at the first fixed electrode (41).

18. The vibration-driven energy harvester according to claim 16, wherein:
the comb teeth (32a) at the second movable electrode (32) have a thickness greater than a thickness of the comb teeth (31a) at the first movable electrode (31); and
the comb teeth (42a) at the second fixed electrode (42) have a thickness greater than a thickness of the comb teeth (41a) at the first fixed electrode (41).

19. The vibration-driven energy harvester according to claim 16, wherein:
a gap between the comb teeth (42a) of the second fixed electrode (42) and the comb teeth (32a) of the second movable electrode (32) is smaller than a gap between the comb teeth (41a) of the first fixed electrode (41) and the comb teeth (31a) of the first movable electrode (31).

20. The vibration-driven energy harvester according to any one of claims 1 through 19, wherein:
the movable assembly (35) includes a movable unit (3) supported by the elastic support member (33a, b) and a weight (34) fixed to the movable unit (3).

## Patentansprüche

1. Vibrationsangetriebener Energiegewinner, der Folgendes umfasst:
eine Basis (2);
eine bewegbare Anordnung (35), die eine erste bewegbare Elektrode (31) und eine zweite bewegbare Elektrode (32) einschließt;
eine erste feste Elektrode (41), die derart angeordnet ist, dass sie der ersten bewegbaren Elektrode (31) entgegengesetzt zugewandt ist;
eine zweite feste Elektrode (42), die derart angeordnet ist, dass sie der zweiten bewegbaren Elektrode entgegengesetzt zugewandt ist;
ein elastisches Tragelement (33a, b), das ein festes Ende (36) aufweist, das an der Basis (2) befestigt ist, wobei das elastische Tragelement (33a, b) die bewegbare Anordnung (35) trägt;
ein erstes Elektret, das an mindestens einer der ersten bewegbaren Elektrode (31) und der ersten festen Elektrode (41) gebildet ist; und
ein zweites Elektret, das an mindestens einer der zweiten bewegbaren Elektrode (32) und der zweiten festen Elektrode (42) gebildet ist; **dadurch gekennzeichnet, dass**:
wenn der vibrationsangetriebene Energiegewinner nicht vibriert und der vibrationsangetriebene Energiegewinner eine horizontale Orientierung aufweist, wobei sich die erste feste Elektrode (41) und die zweite feste Elektrode (42) auf gleicher Höhe in der Richtung der Schwerkraft sind, ein erster Spaltabstand (Ca1) zwischen dem Frontende (51) der ersten bewegbaren Elektrode (31) und einer zugewandten Oberfläche (61) der ersten festen Elektrode (41), die dem Frontende (51) der ersten bewegbaren Elektrode (31) zugewandt ist, von einem zweiten Spaltabstand (Ca2) zwischen einem Frontende (52) der zweiten bewegbaren Elektrode (32) und einer zugewandten Oberfläche (62) der zweiten festen Elektrode (42), die dem Frontende (52) der zweiten bewegbaren Elektrode (32) zugewandt ist, unterscheidet.

2. Vibrationsangetriebener Energiegewinner nach Anspruch 1, wobei:
wenn der vibrationsangetriebene Energiegewinner eine Orientierung aufweist, bei der die erste bewegbare Elektrode (31) in der Richtung der Schwerkraft niedriger positioniert ist als die zweite bewegbare Elektrode (32), der erste Spaltabstand gleich oder größer ist als der zweite Spaltabstand.

3. Vibrationsangetriebener Energiegewinner nach Anspruch 1 oder 2,
wobei ein Abstand zwischen dem festen Ende (36) des elastischen Tragelements (33a, b) und der zugewandten Oberfläche der ersten festen Elektrode (41), die dem Frontende (31) der ersten bewegbaren Elektrode (51) zugewandt ist, größer ist als ein Abstand zwischen dem festen Ende (36) des elastischen Tragelements (33a, b) und der zugewandten Oberfläche der zweiten festen Elektrode (42), die dem Frontende (52) der zweiten bewegbaren Elektrode (32) zugewandt ist.

4. Vibrationsangetriebener Energiegewinner nach einem der Ansprüche 1 bis 3, wobei:
die erste feste Elektrode (41) und die zweite feste Elektrode (42) jeweils eine Vielzahl von Kammzähnen (41a, 42a) einschließen; und
die Kammzähne (41a) der ersten festen Elektrode (41) eine Länge aufweisen, die größer ist als eine Länge der Kammzähne (42a) der zweiten festen Elektrode (42).

5. Vibrationsangetriebener Energiegewinner nach einem der Ansprüche 1 bis 3, wobei:
die erste bewegbare Elektrode (31) und die zweite bewegbare Elektrode (32) jeweils eine Vielzahl von Kammzähnen (31a, 32a) einschließen; und
die Kammzähne (31a) der ersten bewegbaren Elektrode (31) eine Länge aufweisen, die größer ist als eine Länge der Kammzähne (32a) der zweiten bewegbaren Elektrode (32).

6. Vibrationsangetriebener Energiegewinner, der Folgendes umfasst:
eine Basis (2);
eine bewegbare Anordnung (35), die eine erste bewegbare Elektrode (31) einschließt, die eine Vielzahl von Kammzähnen aufweist, und eine zweite bewegbare Elektrode (32), die eine Vielzahl von Kammzähnen aufweist;
eine erste feste Elektrode (41), die derart angeordnet ist, dass sie der ersten bewegbaren Elektrode (31) entgegengesetzt zugewandt ist und eine Vielzahl von Kammzähnen (41a) aufweist;
eine zweite feste Elektrode (42), die derart angeordnet ist, dass sie der zweiten bewegbaren Elektrode (32) entgegengesetzt zugewandt ist und eine Vielzahl von Kammzähnen (42a) aufweist;
ein elastisches Tragelement (33a, b), das ein festes Ende (36) aufweist, das an der Basis (2) befestigt ist, wobei das elastische Tragelement (33a, b) die bewegbare Anordnung (35) trägt;
ein erstes Elektret, das an mindestens einer der ersten bewegbaren Elektrode (31) und der ersten festen Elektrode (41) gebildet ist; und
ein zweites Elektret, das an mindestens einer der zweiten bewegbaren Elektrode (32) und der zweiten festen Elektrode (42) gebildet ist; **dadurch gekennzeichnet, dass**:
wenn der vibrationsangetriebene Energiegewinner nicht vibriert und der vibrationsangetriebene Energiegewinner eine horizontale Orientierung aufweist, wobei die erste feste Elektrode (41) und die zweite feste Elektrode (42) auf gleicher Höhe in der Richtung der Schwerkraft liegen, eine erste zugewandte Flächenlänge einer zugewandten Fläche, über die die Kammzähne (32a) der ersten bewegbaren Elektrode (32) den Kammzähnen (41a) der ersten festen Elektrode (41) entgegengesetzt zugewandt sind, sich von einer zweiten zugewandten Flächenlänge einer zugewandten Fläche unterscheidet, über die die Kammzähne (32a) der zweiten bewegbaren Elektrode (32) und die Kammzähne (42a) der zweiten festen Elektrode (42) einander entgegengesetzt zugewandt sind.

7. Vibrationsangetriebener Energiegewinner nach Anspruch 6, wobei:
ein erster Spaltabstand zwischen einem Frontende (51) der ersten bewegbaren Elektrode (31) und einer zugewandten Oberfläche (61) der ersten festen Elektrode (41), die dem Frontende der ersten bewegbaren Elektrode (31) zugewandt ist, gleich oder größer ist als ein zweiter Spaltabstand zwischen einem Frontende (52) der zweiten bewegbaren Elektrode (32), und einer zugewandte Oberfläche (62) der zweiten festen Elektrode (42), die dem Frontende (52) der zweiten bewegbaren Elektrode (32) zugewandt ist.

8. Vibrationsangetriebener Energiegewinner nach Anspruch 6, wobei:
eine erste zugewandte Flächenlänge kleiner ist als die zweite zugewandte Flächenlänge, wenn der vibrationsangetriebene Energiegewinner eine Orientierung aufweist, in der die erste bewegbare Elektrode (31) niedriger in der Richtung der Schwerkraft positioniert ist als die zweite bewegbare Elektrode (32).

9. Vibrationsangetriebener Energiegewinner nach Anspruch 6, wobei:
ein Abstand zwischen dem festen Ende (36) des elastischen Tragelements (33a, b) und einer zugewandten Oberfläche (61) der ersten festen Elektrode (41), die einem Frontende (51) der ersten bewegbaren Elektrode (31) zugewandt ist, kleiner ist als ein Abstand zwischen dem festen Ende (36) des elastischen Tragelements (33a, b) und einer zugewandten Oberfläche (62) der zweiten festen Elektrode (42), die einem Frontende (52) der zweiten bewegbaren Elektrode (32) zugewandt ist.

10. Vibrationsangetriebener Energiegewinner nach einem der Ansprüche 6 bis 9, wobei:
die Kammzähne (41a) der ersten festen Elektrode (41) eine Länge aufweisen, die kleiner ist als eine Länge der Kammzähne (42a) der zweiten festen Elektrode (42).

11. Vibrationsangetriebener Energiegewinner (100), der Folgendes umfasst:
Eine Basis (102);
eine bewegbare Anordnung (135), die eine erste bewegbare Elektrode (131) und eine zweite bewegbare Elektrode (132) einschließt;
eine erste feste Elektrode (141), die derart angeordnet ist, dass sie der ersten bewegbaren Elektrode (131) entgegengesetzt zugewandt ist;
eine zweite feste Elektrode (142), die derart angeordnet ist, dass sie der zweiten bewegbaren Elektrode (132) entgegengesetzt zugewandt ist;
ein elastisches Tragelement (133a, b), das ein festes Ende (136) aufweist, das an der Basis (2) befestigt ist, wobei das elastische Tragelement (133a, b) die bewegbare Anordnung (135) trägt;
ein erstes Elektret, das an mindestens einer der ersten bewegbaren Elektrode (131) und der ersten festen Elektrode (141) gebildet ist; und
ein zweites Elektret, das an mindestens einer der zweiten bewegbaren Elektrode (132) und der zweiten festen Elektrode (142) gebildet ist;
**gekennzeichnet durch** einen ersten Anschlag (15a) und einen zweiten Anschlag (15b) zum Regeln einer Schwingungsamplitude der bewegbaren Anordnung (135), die jeweils derart angeordnet ist, das sie dem einen Ende der bewegbaren Anordnung (135), das sich an einer Seite befindet, an der die erste feste Elektrode (141) vorhanden ist und derart entgegengesetzt angeordnet ist, dass sie einem anderen Ende der bewegbaren Anordnung (135), die sich an einer Seite befindet, an der die zweite feste Elektrode (132) vorhanden ist, entgegengesetzt zugewandt ist, wobei:
wenn der vibrationsangetriebene Energiegewinner (100) nicht vibriert und der vibrationsangetriebene Energiegewinner (100) eine horizontale Orientierung aufweist, wobei die erste feste Elektrode (141) und die zweite feste Elektrode (142) auf gleicher Höhe in der Richtung der Schwerkraft liegen, sich ein Spaltabstand zwischen dem anderen Ende der bewegbaren Anordnung (135) und dem zweiten Anschlag (15b) von einem Spaltabstand zwischen dem einen Ende der bewegbaren Anordnung (135) und dem ersten Anschlag (15a) unterscheidet.

12. Vibrationsangetriebener Energiegewinner (100) nach Anspruch 11, wobei:
der Spaltabstand zwischen dem einen Ende der bewegbaren Anordnung (135) und dem ersten Anschlag (15a) größer ist als der Spaltabstand zwischen dem anderen Ende der bewegbaren Anordnung (135) und dem zweiten Anschlag (15b); und
wenn der vibrationsangetriebene Energiegewinner eine Orientierung aufweist, bei der sich der vibrationsangetriebene Energiegewinner in einer Orientierung befindet, in der die erste bewegbare Elektrode (131) in der Richtung der Schwerkraft niedriger positioniert ist als die zweite bewegbare Elektrode (132), der Spaltabstand zwischen dem einen Ende der bewegbaren Anordnung (135) und dem ersten Anschlag (15a) im Wesentlichen gleich oder größer ist als der Spaltabstand zwischen dem anderen Ende der bewegbaren Anordnung (135) und dem zweiten Anschlag (15b).

13. Vibrationsangetriebener Energiegewinner, der Folgendes umfasst:
eine Basis (2);
eine bewegbare Anordnung (35), die eine erste bewegbare Elektrode (31) und eine zweite bewegbare Elektrode (32) einschließt;
eine erste feste Elektrode (41), die derart angeordnet ist, dass sie der ersten bewegbaren Elektrode (31) entgegengesetzt zugewandt ist;
eine zweite feste Elektrode (42), die derart angeordnet ist, dass sie der zweiten bewegbaren Elektrode (32) entgegengesetzt zugewandt ist;
ein elastisches Tragelement (33a, b), das ein festes Ende (36) aufweist, das an der Basis (2) befestigt ist, wobei das elastische Tragelement (33a, b) die bewegbare Anordnung (35) trägt;
ein erstes Elektret, das an mindestens einer der ersten bewegbaren Elektrode (31) und der ersten festen Elektrode (41) gebildet ist; und
ein zweites Elektret, das an mindestens einer der zweiten bewegbaren Elektrode (32) und der zweiten festen Elektrode (42) gebildet ist; **dadurch gekennzeichnet, dass**:
wenn der vibrationsangetriebene Energiegewinner nicht vibriert und der vibrationsangetriebene Energiegewinner eine horizontale Orientierung aufweist, bei der die erste feste Elektrode (41) und die zweite feste Elektrode (42) auf gleicher Höhe in der Richtung der Schwerkraft liegen, eine elektrostatische Kraft, die zwischen der zweiten bewegbaren Elektrode (32) und der zweiten festen Elektrode (42) wirkt, sich von der elektrostatischen Kraft, die zwischen der ersten bewegbaren Elektrode (31) und der ersten festen Elektrode (41) wirkt, unterscheidet.

14. Vibrationsangetriebener Energiegewinner nach Anspruch 13, wobei:
wenn der vibrationsangetriebene Energiegewinner eine Orientierung aufweist, bei der die erste bewegbare Elektrode (31) in der Richtung der Schwerkraft niedriger positioniert ist als die zweite bewegbare Elektrode (31), die elektrostatische Kraft, die zwischen der zweiten bewegbaren Elektrode (32) und der zweiten festen Elektrode (42) wirkt, größer ist als die elektrostatische Kraft, die zwischen der ersten bewegbaren Elektrode (31) und der ersten festen Elektrode (41) wirkt.

15. Vibrationsangetriebener Energiegewinner nach Anspruch 14, wobei:
eine Ladespannung an dem zweiten Elektret größer ist als eine Ladespannung an dem ersten Elektret.

16. Vibrationsangetriebener Energiegewinner nach Anspruch 14 oder Anspruch 15, wobei:
die erste feste Elektrode (41) und die zweite feste Elektrode (42) jeweils eine Vielzahl von Kammzähnen (41a, 42a) einschließen; und
die erste bewegbare Elektrode (31) eine Vielzahl von Kammzähnen (31a) einschließt und die zweite bewegbare Elektrode (32) eine Vielzahl von Kammzähnen (32a) einschließt, die jeweils mit der ersten festen Elektrode (41) und der zweiten festen Elektrode (42) ineinandergreifen sollen.

17. Vibrationsangetriebener Energiegewinner nach Anspruch 16, wobei:
die Kammzähne (32a) an der zweiten bewegbaren Elektrode (32) im Vergleich zu den Kammzähnen (31a) an der ersten bewegbaren Elektrode (31) zahlreicher sind; und
die Kammzähne (42a) an der zweiten festen Elektrode (42) zahlreicher sind als die Kammzähne (41a) an der ersten festen Elektrode (41).

18. Vibrationsangetriebener Energiegewinner nach Anspruch 16, wobei:
die Kammzähne (32a) an der zweiten bewegbaren Elektrode (32) eine Dicke aufweisen, die größer ist als eine Dicke der Kammzähne (31a) an der ersten bewegbaren Elektrode (31); und
die Kammzähne (42a) an der zweiten festen Elektrode (42) eine Dicke aufweisen, die größer ist als eine Dicke der Kammzähne (41a) an der ersten festen Elektrode (41).

19. Vibrationsangetriebener Energiegewinner nach Anspruch 16, wobei:
ein Spalt zwischen den Kammzähnen (42a) der zweiten festen Elektrode (42) und den Kammzähnen (32a) der zweiten bewegbaren Elektrode (32) kleiner ist als ein Spalt zwischen den Kammzähnen (41a) der ersten festen Elektrode (41) und den Kammzähnen (31a) der ersten bewegbaren Elektrode (31).

20. Vibrationsangetriebener Energiegewinner nach einem der Ansprüche 1 bis 19, wobei:
die bewegbare Anordnung (35) eine bewegbare Einheit (3), die von dem elastischen Tragelement (33a, b) getragen wird, und ein Gewicht (34), das an der bewegbaren Einheit (3) befestigt ist, einschließt.

## Revendications

1. Récupérateur d'énergie à vibrations, comprenant :
une base (2) ;
un ensemble mobile (35) qui comprend une première électrode mobile (31) et une deuxième électrode mobile (32) ;
une première électrode fixe (41) disposée de manière à être en regard de la première électrode mobile (31) ;
une deuxième électrode fixe (42) disposée de manière à être en regard de la deuxième électrode mobile ;
un élément de support élastique (33a, b) ayant une extrémité fixe (36) fixée à la base (2), l'élément de support élastique (33a, b) supportant l'ensemble mobile (35) ;
un premier électret formé au moins sur l'une parmi la première électrode mobile (31) et la première électrode fixe (41) ; et
un deuxième électret formé au moins sur l'une parmi la deuxième électrode mobile (32) et la deuxième électrode fixe (42), **caractérisé en ce que** :
lorsque le récupérateur d'énergie à vibrations ne vibre pas et que le récupérateur d'énergie à vibrations présente une orientation horizontale dans laquelle la première électrode fixe (41) et la deuxième électrode fixe (42) sont à une même hauteur dans la direction de la gravité, une première distance d'écartement (Ca1) entre une extrémité avant (51) de la première électrode mobile (31) et une surface en regard (61) de la première électrode fixe (41) en regard de l'extrémité avant (51) de la première électrode mobile (31) est différente d'une deuxième distance d'écartement (Ca2) entre une extrémité avant (52) de la deuxième électrode mobile (32) et une surface en regard (62) de la deuxième électrode fixe (42) en regard de l'extrémité avant (52) de la deuxième électrode mobile (32).

2. Récupérateur d'énergie à vibrations selon la revendication 1, dans lequel :
lorsque le récupérateur d'énergie à vibrations présente une orientation dans laquelle la première électrode mobile (31) est positionnée plus bas dans la direction de la gravité que la deuxième électrode mobile (32), la première distance d'écartement est égale ou supérieure à la deuxième distance d'écartement.

3. Récupérateur d'énergie à vibrations selon la revendication 1 ou 2, dans lequel :
une distance entre l'extrémité fixe (36) de l'élément de support élastique (33a, b) et la surface en regard de la première électrode fixe (41) en regard de l'extrémité avant (31) de la première électrode mobile (51) est supérieure à une distance entre l'extrémité fixe (36) de l'élément de support élastique (33a, b) et la surface en regard de la deuxième électrode fixe (42) en regard de l'extrémité avant (52) de la deuxième électrode mobile (32).

4. Récupérateur d'énergie à vibrations selon l'une quelconque des revendications 1 à 3, dans lequel :
la première électrode fixe (41) et la deuxième électrode fixe (42) comprennent chacune une pluralité de dents de peigne (41a, 42a) ; et
les dents de peigne (41a) de la première électrode fixe (41) ont une longueur supérieure à une longueur des dents de peigne (42a) de la deuxième électrode fixe (42).

5. Récupérateur d'énergie à vibrations selon l'une quelconque des revendications 1 à 3, dans lequel :
la première électrode mobile (31) et la deuxième électrode mobile (32) comprennent chacune une pluralité de dents de peigne (31a, 32a) ; et
les dents de peigne (31a) de la première électrode mobile (31) ont une longueur supérieure à une longueur des dents de peigne (32a) de la deuxième électrode mobile (32).

6. Récupérateur d'énergie à vibrations, comprenant :
une base (2) ;
un ensemble mobile (35) qui comprend une première électrode mobile (31) ayant une pluralité de dents de peigne et une deuxième électrode mobile (32) ayant une pluralité de dents de peigne ;
une première électrode fixe (41) disposée de manière à être en regard de la première électrode mobile (31) et ayant une pluralité de dents de peigne (41a) ;
une deuxième électrode fixe (42) disposée de manière à être en regard de la deuxième électrode mobile (32) et ayant une pluralité de dents de peigne (42a) ;
un élément de support élastique (33a, b) ayant une extrémité fixe (36) fixée à la base (2), l'élément de support élastique (33a, b) supportant l'ensemble mobile (35) ;
un premier électret formé au moins sur l'une parmi la première électrode mobile (31) et la première électrode fixe (41) ; et
un deuxième électret formé au moins sur l'une parmi la deuxième électrode mobile (32) et la deuxième électrode fixe (42), **caractérisé en ce que** :
lorsque le récupérateur d'énergie à vibrations ne vibre pas et que le récupérateur d'énergie à vibrations présente une orientation horizontale dans laquelle la première électrode fixe (41) et la deuxième électrode fixe (42) sont à une même hauteur dans la direction de la gravité, une première longueur de zone en regard d'une zone en regard sur laquelle les dents de peigne (32a) de la première électrode mobile (32) sont en regard des dents de peigne (41a) de la première électrode fixe (41) est différente d'une deuxième longueur de zone en regard d'une zone en regard sur laquelle les dents de peigne (32a) de la deuxième électrode mobile (32) et les dents de peigne (42a) de la deuxième électrode fixe (42) sont en regard l'une de l'autre.

7. Récupérateur d'énergie à vibrations selon la revendication 6, dans lequel :
une première distance d'écartement entre une extrémité avant (51) de la première électrode mobile (31) et une surface en regard (61) de la première électrode fixe (41) en regard de l'extrémité avant de la première électrode mobile (31) est égale ou supérieure à une deuxième distance d'écartement entre une extrémité avant (52) de la deuxième électrode mobile (32) et une surface en regard (62) de la deuxième électrode fixe (42) en regard de l'extrémité avant (52) de la deuxième électrode mobile (32).

8. Récupérateur d'énergie à vibrations selon la revendication 6, dans lequel :
la première longueur de zone en regard est inférieure à la deuxième longueur de zone en regard lorsque le récupérateur d'énergie à vibrations présente une orientation dans laquelle la première électrode mobile (31) est positionnée plus bas dans la direction de la gravité que la deuxième électrode mobile (32).

9. Récupérateur d'énergie à vibrations selon la revendication 6, dans lequel :
une distance entre l'extrémité fixe (36) de l'élément de support élastique (33a, b) et une surface en regard (61) de la première électrode fixe (41) en regard d'une extrémité avant (51) de la première électrode mobile (31) est inférieure à une distance entre l'extrémité fixe (36) de l'élément de support élastique (33a, b) et une surface en regard (62) de la deuxième électrode fixe (42) en regard d'une extrémité avant (52) de la deuxième électrode mobile (32).

10. Récupérateur d'énergie à vibrations selon l'une quelconque des revendications 6 à 9, dans lequel :
les dents de peigne (41a) de la première électrode fixe (41) ont une longueur inférieure à une longueur des dents de peigne (42a) de la deuxième électrode fixe (42).

11. Récupérateur d'énergie à vibrations (100), comprenant :
une base (102) ;
un ensemble mobile (135) qui comprend une première électrode mobile (131) et une deuxième électrode mobile (132) ;
une première électrode fixe (141) disposée de manière à être en regard de la première électrode mobile (131) ;
une deuxième électrode fixe (142) disposée de manière à être en regard de la deuxième électrode mobile (132) ;
un élément de support élastique (133a, b) ayant une extrémité fixe (136) fixée à la base (2), l'élément de support élastique (133a, b) supportant l'ensemble mobile (135) ;
un premier électret formé au moins sur l'une parmi la première électrode mobile (131) et la première électrode fixe (141) ;
un deuxième électret formé au moins sur l'une parmi la deuxième électrode mobile (132) et la deuxième électrode fixe (142) ; **caractérisé par**
une première butée (15a) et une deuxième butée (15b) destinées à réguler une amplitude de vibration de l'ensemble mobile (135), respectivement disposées de manière à être en regard d'une extrémité de l'ensemble mobile (135) située sur un côté où la première électrode fixe (141) est présente et de manière à être en regard d'une autre extrémité de l'ensemble mobile (135) située sur un côté où la deuxième électrode fixe (132) est présente, dans lequel :
lorsque le récupérateur d'énergie à vibrations (100) ne vibre pas et que le récupérateur d'énergie à vibrations (100) présente une orientation horizontale dans laquelle la première électrode fixe (141) et la deuxième électrode fixe (142) sont à une même hauteur dans la direction de la gravité, une distance d'écartement entre l'autre extrémité de l'ensemble mobile (135) et la deuxième butée (15b) est différente d'une distance d'écartement entre ladite une extrémité de l'ensemble mobile (135) et la première butée (15a).

12. Récupérateur d'énergie à vibrations (100) selon la revendication 11, dans lequel :
la distance d'écartement entre ladite une extrémité de l'ensemble mobile (135) et la première butée (15a) est supérieure à la distance d'écartement entre ladite une autre extrémité de l'ensemble mobile (135) et la deuxième butée (15b) ; et
lorsque le récupérateur d'énergie à vibrations présente une orientation dans laquelle le récupérateur d'énergie à vibrations est dans une orientation dans laquelle la première électrode mobile (131) est positionnée plus bas dans la direction de la gravité que la deuxième électrode mobile (132), la distance d'écartement entre ladite une extrémité de l'ensemble mobile (135) et la première butée (15a) est sensiblement égale ou supérieure à la distance d'écartement entre ladite une autre extrémité de l'ensemble mobile (135) et la deuxième butée (15b).

13. Récupérateur d'énergie à vibrations, comprenant :
une base (2) ;
un ensemble mobile (35) qui comprend une première électrode mobile (31) et une deuxième électrode mobile (32) ;
une première électrode fixe (41) disposée de manière à être en regard de la première électrode mobile (31) ;
une deuxième électrode fixe (42) disposée de manière à être en regard de la deuxième électrode mobile (32) ;
un élément de support élastique (33a, b) ayant une extrémité fixe (36) fixée à la base (2), l'élément de support élastique (33a, b) supportant l'ensemble mobile (35) ;
un premier électret formé au moins sur l'une parmi la première électrode mobile (31) et la première électrode fixe (41) ; et
un deuxième électret formé au moins sur l'une parmi la deuxième électrode mobile (32) et la deuxième électrode fixe (42), **caractérisé en ce que** :
lorsque le récupérateur d'énergie à vibrations ne vibre pas et que le récupérateur d'énergie à vibrations présente une orientation horizontale dans laquelle la première électrode fixe (41) et la deuxième électrode fixe (42) sont à une même hauteur dans la direction de la gravité, une force électrostatique agissant entre la deuxième électrode mobile (32) et la deuxième électrode fixe (42) est différente d'une force électrostatique agissant entre la première électrode mobile (31) et la première électrode fixe (41).

14. Récupérateur d'énergie à vibrations selon la revendication 13, dans lequel :
lorsque le récupérateur d'énergie à vibrations présente une orientation dans laquelle la première électrode mobile (31) est positionnée plus bas dans la direction de la gravité que la deuxième électrode mobile (31), la force électrostatique agissant entre la deuxième électrode mobile (32) et la deuxième électrode fixe (42) est supérieure à la force électrostatique agissant entre la première électrode mobile (31) et la première électrode fixe (41).

15. Récupérateur d'énergie à vibrations selon la revendication 14, dans lequel :
une tension de charge au niveau du deuxième électret est supérieure à une tension de charge au niveau du premier électret.

16. Récupérateur d'énergie à vibrations selon la revendication 14 ou 15, dans lequel :
la première électrode fixe (41) et la deuxième électrode fixe (42) comprennent chacune une pluralité de dents de peigne (41a, 42a) ; et
la première électrode mobile (31) comprend une pluralité de dents de peigne (31a) et la deuxième électrode mobile (32) comprend une pluralité de dents de peigne (32a), destinées respectivement à être interdigitées avec la première électrode fixe (41) et la deuxième électrode fixe (42).

17. Récupérateur d'énergie à vibrations selon la revendication 16, dans lequel :
les dents de peigne (32a) au niveau de la deuxième électrode mobile (32) sont plus nombreuses que les dents de peigne (31a) au niveau de la première électrode mobile (31) ; et
les dents de peigne (42a) au niveau de la deuxième électrode fixe (42) sont plus nombreuses que les dents de peigne (41a) au niveau de la première électrode fixe (41).

18. Récupérateur d'énergie à vibrations selon la revendication 16, dans lequel :
les dents de peigne (32a) au niveau de la deuxième électrode mobile (32) ont une épaisseur supérieure à une épaisseur des dents de peigne (31a) au niveau de la première électrode mobile (31) ; et
les dents de peigne (42a) au niveau de la deuxième électrode fixe (42) ont une épaisseur supérieure à une épaisseur des dents de peigne (41a) au niveau de la première électrode fixe (41).

19. Récupérateur d'énergie à vibrations selon la revendication 16, dans lequel :
un écartement entre les dents de peigne (42a) de la deuxième électrode fixe (42) et les dents de peigne (32a) de la deuxième électrode mobile (32) est inférieur à un écartement entre les dents de peigne (41a) de la première électrode fixe (41) et les dents de peigne (31a) de la première électrode mobile (31).

20. Récupérateur d'énergie à vibrations selon l'une quelconque des revendications 1 à 19, dans lequel :
l'ensemble mobile (35) comprend une unité mobile (3) supportée par l'élément de support élastique (33a, b) et un poids (34) fixé à l'unité mobile (3).
